# EUROPEAN PATENT SPECIFICATION

(11) **EP 4 159 906 B1**
(45) Date of publication and mention of the grant of the patent: **09.07.2025**
(21) Application number: 21817497.7
(22) Date of filing: 17.05.2021
(51) Int. Cl.: D04B 35/12, G06T 7/00

(54) **IMAGE-PROCESSING DEVICE AND KNITTING MACHINE COMPRISING AN IMAGE-PROCESSING DEVICE**
BILDVERARBEITUNGSVORRICHTUNG SOWIE STRICKMASCHINE MIT EINER BILDVERARBEITUNGSVORRICHTUNG
DISPOSITIF DE TRAITEMENT D'IMAGE ET MACHINE À TRICOTER COMPRENANT UN DISPOSITIF DE TRAITEMENT D'IMAGES

(30) Priority: 02.06.2020 JP 2020096081
(43) Date of publication of application: 05.04.2023
(73) Proprietor: SHIMA SEIKI MFG., LTD., Wakayama 641-8511 (JP)
(72) Inventor: SHIMOYAMA, Yasuo, Wakayama-shi, Wakayama 641-8511 (JP)
(74) Representative: Wimmer, Hubert
(86) International application number: PCT/JP2021/018531
(87) International publication number: WO 2021/246139

(56) References cited:
- CN-A- 108 038 858
- CN-A- 109 162 016
- CN-A- 109 632 817
- JP-A- 2000 053 326
- JP-A- H08 277 069
- JP-A- H08 277 069
- US-A1- 2002 032 533
- US-B1- 6 580 813

## Description

### Field of the Invention

The present invention relates to an image processing device, a machine-learning device, and an inference device.

### Background Art

On knitting machines, plural yarn cones which are wound by yarns are arranged on the knitting machines or at the periphery of them. For knitting knitted fabrics (for example, knitted products), various yarn cones are used. The operators of knitting machines exchange yarn cones having yarns which are different in colors and thicknesses according to the knitted fabrics to be knitted. When yarn cones become empty, the knitting machines have to stop, and therefore, the operators have to monitor the residual amounts of yarns of yarn cones manually. Yarns fed from yarn cones are connected to and pass through plural tensioning devices which are arranged on the upper part of knitting machines and then fed to needles with proper tension. The operators of knitting machines have to connect correctly respective yarns fed from respective yarn cones to predetermined tensioning devices. However, the connection between the yarn cones and the tensioning devices via the yarns is sometimes wrong.

Various devices have been developed to detect the residual amounts of yarns of yarn cones. For example, Patent Document 1 proposes to irradiate light towards the sides of yarn cones and receive the reflected light thereon to detect the residual amounts of yarns. Patent Document 2 proposes to irradiate light to the bottoms of yarn cones in order to receive light transmitting through the sides of them by a photo-receiving sensor for detecting the residual amounts of yarns when the outer diameters of the yarn cones become smaller. Patent Document 3 relates to a collimated laser beam-based fabric weaving online defect detection method. Patent Document 4 relates a method and apparatus of detecting residual yarn on spinning cop tubes, wherein a spinning cop tube is exposed to a suitable light source; the light reflected by the spinning cop tube is detected by a suitable means, e.g., via a camera or other picture-taking device, and two-dimensional picture signals of the spinning cop tube are generated thereby on the basis of the reflected light detected in order to generate a picture matrix comprising picture data in digital form; and the picture signals thusly generated are evaluated by means of performing an edge filtering of the digital picture data in order to segment image edges corresponding to brightness transitions in the picture matrix, from which the presence of residual yarn on the spinning cop tube can be assessed based on the edge filtering. Patent Document 5 relates to a method for recognizing the amount of yarns on a yarn pipe in a machine vision system in the textile field. The method comprises the following steps: photographing an image of a yarn pipe object, and converting the photographed yarn pipe image into a grey-scale map; cutting the grey-scale map according to the size of the yarn pipe, so as to acquire an area-of-interest ROI; filtering the background part of the ROI, and extracting the maximum gray value of the ROI; carrying out binaryzation on the ROI according to a preset threshold, so as to obtain a binary picture in which yarns and a light reflection region are overlapped together; processing the binary picture to eliminate light reflection parts in the ROI, so as to obtain a main effect picture of the yarns; and recognizing the yarns according to the main effect picture of the yarns, and determining the proportion of the yarns on the yarn pipe. Patent Document 6 relates to an automatic and continuous measurement and control method of the tension and/or running of the yarns fed into knitting machines.

### Prior Document List

### Patent Document

Patent Document 1: JP H08-277069A
Patent Document 2: JP 2871318B
Patent Document 3: CN 109 632 817 A
Patent Document 4: US 6 580 813 B1
Patent Document 5: CN 108 038 858 A
Patent Document 6: US 2002/032533 A1

### Summary of the Invention

### Problem to be Solved by the Invention

The detection devices of residual yarn amounts proposed by Patent Documents 1 and 2 need optical elements such as photo-receiving sensors and reflective mirrors provided in the vicinity of yarn cones. Therefore, many optical elements are needed. When yarn cones are arranged in a dense manner, the space for the optical elements is restricted and the adjustment of the light pass becomes difficult when assembling the knitting machine. Further, the relative positions of yarn cones to the optical elements are uniquely predetermined. Therefore, when yarn cones are arranged out of the predetermined positions, the yarn cones cannot be detected. Further, according to Patent Documents 1 and 2, the connection between the yarn cones and the tensioning devices cannot be detected.

The object of the invention is to provide an image processing device that can detect simply the status of an arbitrary number of yarn cones, arranged on the upper part of knitting machine or at the periphery of it, regarding the residual amounts of yarns, the connections to the tensioning devices, and their positions, and have high workability and high versatility.

### Means for Solving the Problem

The present invention is defined by the appended independent claim. Further embodiments of the present invention are defined by the appended dependent claims. Advantageous Effects of the Invention

According to the image processing device (4A to 4C) of the present invention, the statuses of an arbitrary number of yarn cones in the captured image, for example, the residual amounts of yarns of the yarn cones, the connection relation between the yarn cones and the tensioning devices, the positions of yarn cones, is detectable. Therefore, optical elements for respective yarn cones are not needed. The statuses of yarn cones are detectable without restrictions due to the number and the positions of yarn cones, arranged on the knitting machine or at the periphery of it. Thus, the statuses of yarn cones are simply detectable, and therefore, the workability and versatility are improved.

In addition, according to the machine-learning device (6A, 6B1, 6B2, and 6C) of the present invention, the machine-learned models (5A, 5B1, 5B2, and 5C) are generated such that they can accurately detect (infer) the statuses of the arbitrary number of yarn cones in the captured image (for example, the residual amounts of yarns of yarn cones, the connection between the yarn cones and the tensioning devices, the arranged positions of yarn cones).

### Brief Description of Drawing.

[Fig. 1] A perspective view showing an example of a flat knitting machine 1 according to the first embodiment.
[Fig. 2] A view showing a camera-captured image 30 captured by camera 3.
[Fig. 3] A schematic block diagram showing the flat knitting machine 1 equipped with the image processing device 4A according to the first embodiment.
[Fig. 4] A flowchart showing an example of the image processing method by the image processing device 4A according to the first embodiment.
[Fig. 5] A schematic block diagram showing an example of the machine-learning device 6A according to the first embodiment.
[Fig. 6] A view indicating an example of an inference model 50A based on a CNN which is used in the machine-learning device 6A according to the first embodiment.
[Fig. 7] A flowchart showing an example of the machine-learning method according to the first embodiment.
[Fig. 8] A schematic block diagram showing an example of a flat knitting machine 1 equipped with an image processing device 4B according to the second embodiment.
[Fig. 9] A flowchart showing an example of the image processing method by the image processing device 4B according to the second embodiment.
[Fig. 10] A schematic block diagram showing an example of the first machine-learning device 6B1 according to the second embodiment.
[Fig. 11] A diagram showing an example of a first inference model 50B1 based on a CNN used in the first machine-learning device 6B1 according to the second embodiment.
[Fig. 12] A schematic block diagram showing an example of a second machine-learning device 6B2 according to the second embodiment.
[Fig. 13] A view indicating an example of a second inference model 50B2 based on a CNN which is used in the second machine-learning device 6B2 according to the second embodiment.
[Fig. 14] A schematic block diagram of an example of a flat knitting machine 1 equipped with an image processing device 4C according to the third embodiment.
[Fig. 15] A flowchart showing an example of an image processing method by the image processing device 4C according to the third embodiment.
[Fig. 16] A schematic block diagram showing an example of a machine-learning device 6C according to the third embodiment.
[Fig. 17] A view indicating an example of an inference model 50C based on a CNN used in the machine-learning device 6C according to the third embodiment.

### Features for Carrying out the Invention

Embodiments for carrying out the present invention will be described below with reference to the drawings. The following will schematically describe those necessary for achieving the objects of the invention. The description will sometimes be limited to the above, and other portions can be carried out with reference to relevant conventional arts.

### (First Embodiment)

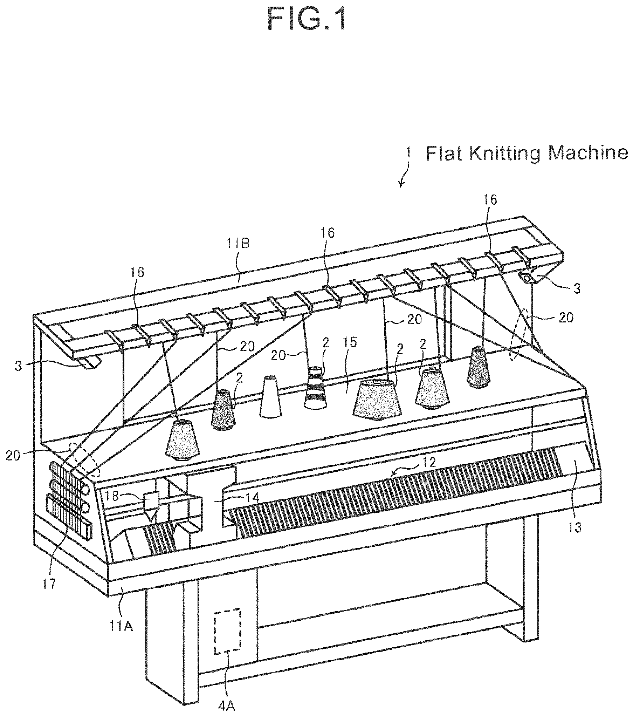

Fig. 1 is a perspective view of a flat knitting machine 1 according to the first embodiment.

The flat knitting machine 1 comprises: a lower frame 11A that is installed on a floor; a pair of needle beds 13 arranged on the lower frame 11A which support a plurality of needles 12 in an advanceable and retractable manner and face each other in a front to back relation; a carriage 14 that moves along the needle beds 13 and makes the needles 12 advanced, and retracted; and a top plate 15 located over both of the needle beds 13 and the carriage 14 and supporting one or more yarn cones 2 on its upper surface. The flat knitting machine 1 may be provided with a creel stand around it that supports any number of yarn cones 2.

The flat knitting machine 1 supplies yarns 20 from the yarn cones 2 on the top plate 15 to the needles 12. The flat knitting machine 1 is further provided with a plurality of tensioning devices 16 attached to the upper frame 11B and positioned over the top plate 15; and a side tensioning devices 17, located, for example, on both sides of the lower frame 11A; and a plurality of yarn feeders 18 which is selectively caught and moved by the carriage 14. The yarns 20 from the yarn cones 2 are fed to the needle 12 via the tensioning devices 16, the side tensioning devices 17, and the yarn feeders 18.

The flat knitting machine 1 is further equipped with a system for detecting the statuses of the yarn cones 2 on the top plate 15: two cameras 3 are mounted on both left and right sides of the upper frame 11B; and an image processing device 4A is accommodated in the lower frame 11A.

The cameras 3 are provided with image sensors such as CMOS sensors and CCD sensors and capture one or plural images of the top plate 15 including the yarn cones from the above. The cameras 3 are adjusted such that the yarn cones 2 on the top plate 15 are within the camera-captured image. The cameras 3 may be equipped with functions for pan, tilt, and zoom, and the number of cameras 3 is not limited to two, but may be one, three or more. The mounting positions of the cameras 3 can be modified; for example, they may be attached to the ceiling over the flat knitting machine 1.

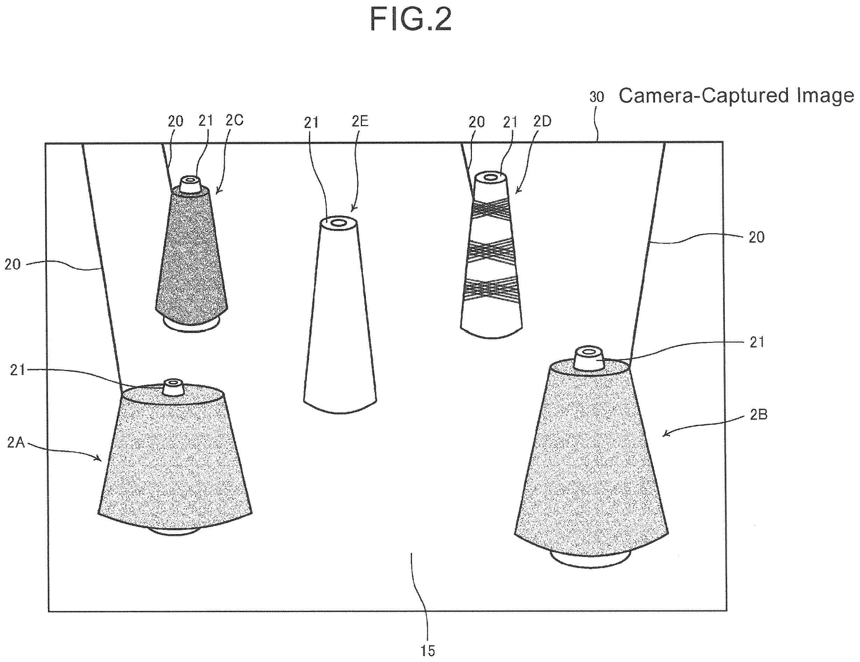

Fig. 2 shows an example of a camera-captured image 30 captured by camera 3.

The camera-captured images 30 include yarn cones 2 placed on the top plate 15. In the example in Fig. 2, five yarn cones 2A-2E are included. The yarn cone 2 has a conical core 21 with a yarn 20 wound around it. The yarn cones can be placed at any position on the top surface of the top plate 15. Therefore, the number of yarn cones 2 included in the camera-captured image 30 is not fixed but is arbitrary. The camera-captured image 30 may include not only the yarn cones 2 on the top plate 15 but also yarn cones 2 that are positioned on creel stands or the like; they are provided in the vicinity of the flat knitting machine 1.

The imaged statuses of the yarn cones 2 (e.g., external shape and external size), included in the camera-captured images 30, depends on the outer diameter of the core 21, the thickness and the number of turns of yarn 20, and also the status of the use of yarn 20. Furthermore, the imaged statuses of yarn cones 2 also vary according to the relative positions of yarn cones 2 and cameras 3. Furthermore, in camera-captured images 30, a portion of yarn cone 2 at the back may be hidden by another yarn cone 2 at the front. In addition to yarn cones 2, the camera-captured images 30 include yarns 20 that are unrolled from yarn cones 2 and connected to the tensioning devices 16. The camera-captured image 30 may include objects other than the yarn cones 2, such as the tensioning devices 16.

In the five yarn cones 2A-2E included in the camera-captured image 30 shown in Fig. 2, the yarn cone 2A is in an unused status in which the yarn cone 2A was installed and not used. As the yarn 20 is gradually used from the unused status, as in yarn cones 2B and 2C, the outer diameter of the yarn cones decreases and the amounts of yarns remaining also decreases. In the yarn cone 2D, part of the core 21 is exposed through a clearance in the yarn 20. The yarn cone eventually becomes "without yarn" as the yarn cone 2E is and the entire core 21 is exposed. Cones 2A-2D are in "with yarn" status, and the remaining amounts of yarns are, for example, "100% remaining," "70% remaining," "40% remaining," and "10% remaining."

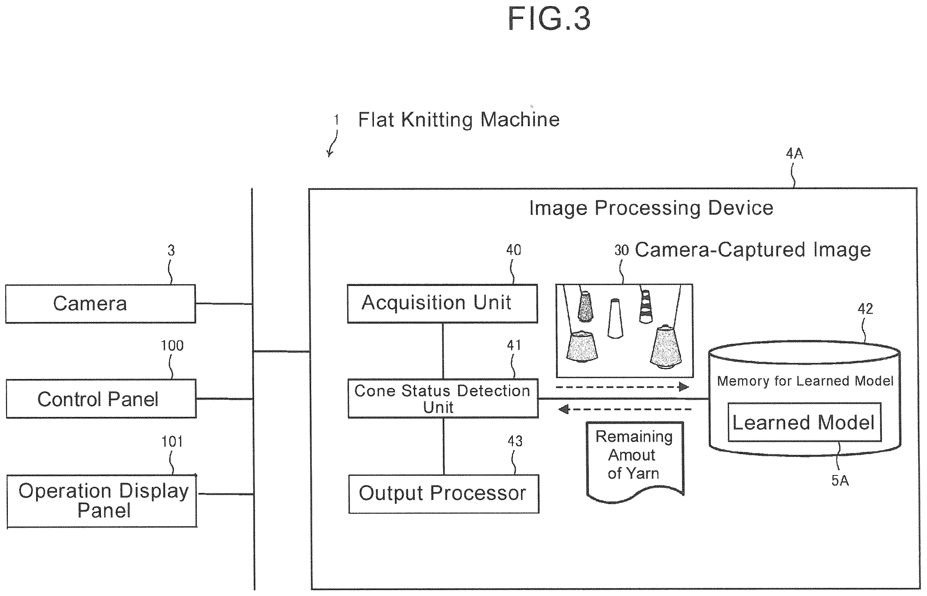

Fig. 3 is a schematic block diagram of the flat knitting machine 1 provided with the image processing device 4A according to the first embodiment.

The flat knitting machine 1 includes, as the electrical components: one or plural cameras 3; an image processing device 4A; a control panel 100 including a micro-controller, etc.; and an operation display panel 101 equipped with a touch panel, switches, etc. The control panel 100 is connected to actuators such as motors and sensors (both not shown) and controls various parts of the flat knitting machine 1 such that it controls the knitting operation by the flat knitting machine 1. The operation display panel 101 accepts the instructions by the operator and outputs various information in the display or as sounds.

### (Image Processing Device 4A)

Image processing device 4A comprises a general-purpose or dedicated computer or the like, and comprises: for example, a processor such as a CPU or a GPU; a memory such as ROM or RAM; a communication device for communicating with outer networks or other devices via a wire or wirelessly; and a bus for connecting these parts. The image processing device 4A may be incorporated into the control panel 100 as a part of the control panel 100 and may or may not be a stand-alone device. The image processing device 4A may consist of a program to cause a processor to perform the operations described below, or a non-transitory computer-readable medium containing one or more instructions for causing the operations to be performed.

The image processing device 4A further comprises, as shown in Fig. 3: an acquisition unit 40; and a yarn cone status detection unit 41; a memory for learned model 42; and an output processor 43. The acquisition unit 40, the yarn cone status detection unit 41, and the output processor 43 comprise the above processing means, and the memory for learned model 42 comprises the above memory.

The acquisition unit 40 is connected to the one or plural cameras 3 and functions as an interface for acquiring the image captured by the cameras 3. The acquisition unit 40 acquires the camera-captured image 30, including yarn cones 2, on or around the flat knitting machine 1 (positioned on the top plate 15, in this embodiment). The connection method and communication method for the connection of the image processing device 4A to the cameras 3 via the acquisition unit 40 is optional.

The yarn cone status detection unit 41 performs image processing to the camera-captured image 30 acquired by the acquisition unit 40 and detects the statuses of cones 2 included in the camera-captured image 30. The statuses of cones 2 include, for example, the amounts of yarns remaining in cones 2, the position, external shape, and external sizes of cones 2, the type (color and thickness) of yarn 20, and the connections between cones 2 and tensioning devices 16. The yarn cone status detection unit 41 may detect one or more regarding the statuses of cones 2.

The yarn cone status detection unit 41 detects the amounts of yarns remaining in cones 2 as the statuses of the yarn cones 2, in this embodiment. The yarn cone status detection unit 41 inputs the camera-captured image 30 to the learned model 5A as the input data as image processing for the camera-captured image 30. The learned model 5A outputs the inference result (remaining amounts of yarns in cones 2). The relevant processes will be described.

The learned model 5A is generated by machine-learning using the machine-learning device 6A and the machine-learning method. The learned model 5A performs machine-learning of the correlation between the camera-captured image 30 containing one or plural cones and the remaining amounts of yarns of the cones 2 in the camera-captured image 30.

The yarn cone status detection unit 41 performs inference using the learned model 5A and applies predetermined image adjustments (e.g., image format, image size, image filter, image mask, etc.) to the camera-captured image 30 as the input data acquired by the acquisition unit 40 as the pre-processing for inference. As a post-processing step of inference, the yarn cone status detection unit 41 applies, for example, a predetermined arithmetic or logical formula to the output data (inference result) outputted by the learned model 5A to determine the amounts of yarns remaining in the cones 2. The inference results by yarn cone status detection unit 41 may be stored in a memory not shown or may be used for online machine-learning or re-learning, for example, to improve the inference accuracy of the learned model 5A.

The output processor 43 outputs the detection results detected by the yarn cone status detection unit 41, i.e., the statuses of the yarn cones 2. Various means can be employed as specific output means. For example, the detection results may be reported to the operator by display or sound via the operation display panel 101. It can be sent and stored in the memory of the control panel 100 as the operation history of the flat knitting machine 1. It may be transmitted to a higher-level production control system of the flat knitting machine 1. In doing so, the output processor 43 may acquire the necessary data (e.g., knitting data, etc.) from the flat knitting machine 1.

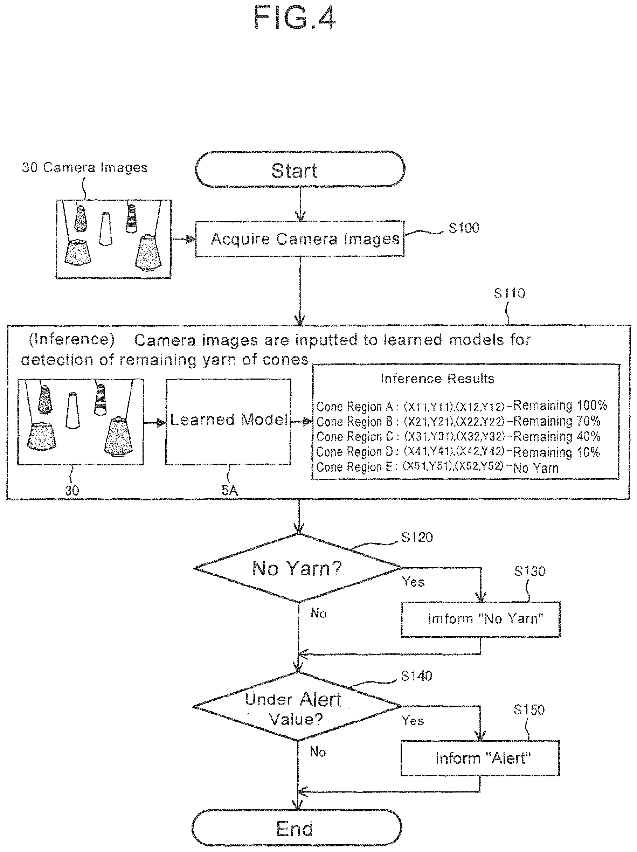

The image processing method by the image processing device 4A will be described with reference to Fig. 4. Fig. 4 is a flowchart showing the image processing method by the image processing device 4A in accordance with the first embodiment. The series of image processing processes shown in Fig. 4 are repeatedly executed by the image processing device 4A at predetermined timings. The predetermined timing may be, for example, at every predetermined time interval or every production number, or it may be when a predetermined event occurs (e.g., when an operator operates, sets up, or stops the machine). In the following, the image processing process is performed while the flat knitting machine 1 is knitting.

When the flat knitting machine 1 starts knitting, yarns 20 are accordingly supplied from the yarn cones 2 placed on the top plate 15, and the knitted fabric is knitted. Next, at a predetermined timing, the acquisition unit 40 acquires camera-captured image 30 of the yarn cones 2 on the top plate 15 by the cameras 3 (step S100).

Then, the yarn cone status detection unit 41 refers to the learned model 5A stored in the memory for learned model 42 and performs inference using this learned model 5A (step S110). In this case, it is preferable that the learned model 5A to be used for inference is identified in advance based on a predetermined program or worker operation.

Specifically, the yarn cone status detection unit 41 pre-processes the camera-captured image 30 acquired by the acquisition unit 40 and inputs it to the learned model 5A. Post-processing is applied to the output data from the learned model 5A by the yarn cone status detection unit 41. In this way, the remaining amounts of yarns of the cones 2 in the camera-captured image 30 are detected as a result of the inference by the learned model 5A. In the inference result of step S110 shown in Fig. 4, five cones in five cone regions A-E (lower left and upper right coordinates are indicated) are detected from the camera-captured image 30. The remaining amounts of yarns in the five cones 2 are then detected in a multi-level manner. Specifically, the amounts of yarns remaining in the four cone regions A - D are "100% remaining," "70% remaining," "40% remaining," and "10% remaining," while the amount of yarn remaining in cone region E is "no yarn."

In step S110, the yarn cone status detection unit 41 infers the amounts of yarns remaining. Based on this result, the output processor 43 determines whether the remaining amounts of yarns in cones 2 are "no yarn" or not (step S120). If the output processor 43 makes a positive judgment in step S120 ("Yes" in step S120), it informs the operator that the result of the inference is "no yarn", for example, on the operation display panel 101 (step S130). In other words, the operator is informed that the flat knitting machine 1 shall stop. In Fig. 4, the cone 2 in the cone region E is reported as "no yarn". At that time, the output processor 43 may notify the control panel 100 that the detection result is "no yarn" and stop the flat knitting machine 1.

If all cones 2 are not "no yarn" ("NO" in step S120), the output processor 43 determines (step S140) whether the amount of yarn remaining in any cone 2 is less than the alert level that indicates the yarn shall become soon empty (e.g., 10% or less). If the output processor 43 determines positively in step S140 ("Yes" in step S140), it informs the operator that the result of the inference is a "no yarn alert", namely, the yarn shall soon become empty and that the flat knitting machine 1 shall soon stop (step S150). At that time, the output processor 43 may notify the "no yarn alert" on the control panel 100.

If the detection result of the amounts of yarns remaining for all cones 2 are not less than the alert level and the output processor 43 judges negatively in step S140 ("NO" in step S140), the image processing process ends without notifying the operator. The output processor 43 may output that the detection result is not "no yarn" and "no yarn alert"#, i.e., "with yarn", and notify on the control panel 100, for example.

The output processor 43 is configured to output "no yarn" and "no yarn alert" as the detection results. However, the output processor 43 may output only one of them. In that case, any of steps S120, S130, S140, and S150 may be omitted. If the tensioning device 16 has a function to detect "no yarn," the tensioning device 16 may detect "no yarn" and the output processor 43 may output "no yarn alert." In that case, steps S120 and S130 may be omitted. Furthermore, if the remaining amounts of yarns are detected in a binary value, for example, if the detection result of the remaining amounts of yarns in the four cones 2 in cone regions A-D is "with yarn" and the detection result of the remaining amount of yarn in cone region E is "no yarn," steps S140 and S150 may be omitted.

As described above, the image processing device 4A and the image processing method according to this embodiment can detect the statuses (in this embodiment, the remaining amounts of yarns) of the yarn cones 2 in the camera-captured image 30. Therefore, there is no need to install optical components for respective cones 2. The statuses of cones 2 can be detected without restriction by conditions such as the number or positions of cones 2. Therefore, the statuses of cones 2 can be easily detected, with improved workability and versatility.

### (Machine-learning Device 6A)

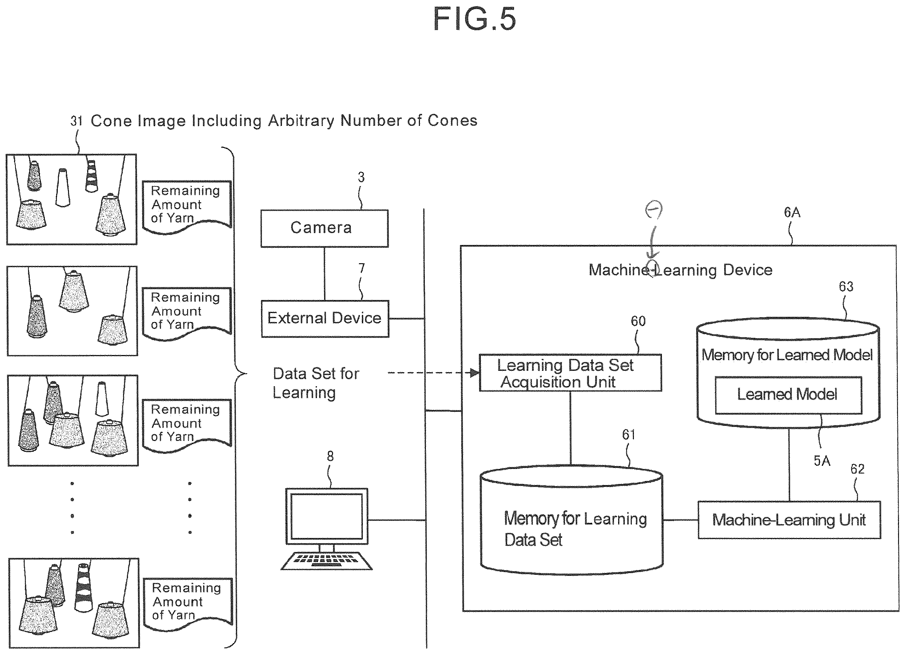

A machine-learning device 6A for detecting the amounts of yarns remaining in one or more cones 2 located on the top panel of the flat knitting machine 1 or in the vicinity of the flat knitting machine will be described with reference to Fig. 5. Fig. 5 is a schematic block diagram of the machine-learning device 6A for the first embodiment.

The machine-learning device 6A generates a learned model ("learned model 5A") which can detect (estimate) the amounts of yarns remaining in the yarn cones 2 based on a yarn cone image 31 that includes an arbitrary number of yarns cones 2. The learned model 5A generated by the machine-learning device 6A is provided to the image processing device 4A and stored in the memory for learned model 42. The learned model 5A is thus used for inference by the yarn cone status detection unit 41. Here, the image processing device 4A and the machine-learning unit 6A are shown as separate devices. However, the image processing device 4A and the machine-learning unit 6A can be single devices.

The machine-learning device 6A comprises a general-purpose or dedicated computer or the like. The machine-learning device 6A may comprise, for example, a processor such as CPU, GPU, etc.; a memory unit comprising ROM, RAM, etc.; and a communication device for communicating with a network or other devices by wired or wireless means; and a bus connecting these parts. The machine-learning device 6A may be provided as a stand-alone device. The machine-learning device may be provided in the form of a program for causing a suitable processor to perform predetermined operations, or a non-transitory storage medium containing instructions for performing these operations.

The machine-learning device 6A has a learning data set acquisition unit 60, a memory for learning data set 61, a machine-learning unit 62, and a memory for a learned model 63, as shown in Fig. 5. The learning data set acquisition unit 60 and the machine-learning unit 62 consists of the processor. The memory for learning data set 61 and the memory for learned model 63 consist of the above memory.

The data set acquisition unit 60 comprises an interface unit, for example, to acquire a plurality of data to form a learning data set (for training) from various devices connected via a communication device. Here, the various devices connected to the learning data set acquisition unit 60 are, for example, an external device 7 or a terminal device 8 used by a worker. In Fig. 5, the machine-learning device 6A, the external device 7, and the terminal device 8 are shown as separate devices. However, these devices may be combined as appropriate. For example, the external device 7 and the terminal device 8 may be a single device. The entire machine-learning device 6A, external device 7, and terminal device 8 may also be a single device.

The learning data set acquisition unit 60 acquires the yarn cone image 31 as the input data, for example, from the external device 7. The learning data set acquisition unit 60 acquires the remaining amounts of yarns of the yarn cones 2 in the yarn cone image 31 as the output data, for example, from the terminal device 8. By mapping these input and output data, a single learning data set is formed.

The yarn cone image 31 including an arbitrary number of cones is an image containing the arbitrary number of cones 2, as shown in Fig. 2. The yarn cone image 31 may be an image of the yarn cones 2 on or around the flat knitting machine 1 (in this embodiment, on the top plate 15) taken by the camera 3. It may also be, for example, an image of the yarn cones 2 placed on a simulated table that simulates the top plate 15 by a camera for data preparation.

The amounts of yarns remaining in cones 2 are the information indicating the amounts of yarns 20 remaining wound around the core 21 of cones 2. Various data formats can be used for this data. For example, the amounts of yarns remaining in cones 2 comprises information indicating "no yarn" or "yarn available". In this case, the amount of yarn remaining is classified into two values, for example, "0" for "no yarn" and "1" for "with yarn. The value of the remaining amount of yarn corresponds to the value that the operator, using the terminal device 8, has assigned to the input data. The amounts of yarns remaining in cones 2 can be indicated in several steps. In this case, the amount of yarn remaining has many values. For example, when expressing the amount of yarn remaining in eleven steps, the value "0" indicates that there is "no yarn", "10% remaining", "20% remaining", ..., "100% remaining", "0.1", "0.2", ..., "1".

The memory for learning data set 61 for learning is a database and stores the learning data set obtained by the data set acquisition unit 60. The structure of the database forming the memory for learning data set 61 can be modified as needed. For example, in Fig. 5, the memory for learning data set 61 and the memory for learned model 63 are shown as separate storage units. However, they can be a single storage unit (database).

The machine-learning unit 62 performs machine-learning using a plurality of data sets for learning stored in the memory 61. This generates a learned model ("learned model 5A") so that the correlation between the input data and the output data in the plurality of data sets for learning can be inferred. In the embodiment, a convolutional neural network (CNN (Convolutional Neural Network)) which will be described in detail is employed as the specific learning method for machine-learning.

The memory for learned model 63 is a database for storing the learned model 5A generated by the machine-learning unit 62. The learned model 5A stored in the memory for learned model 63 are applied to the real system (image processing device 4A) via communication lines including the Internet or storage media upon request.

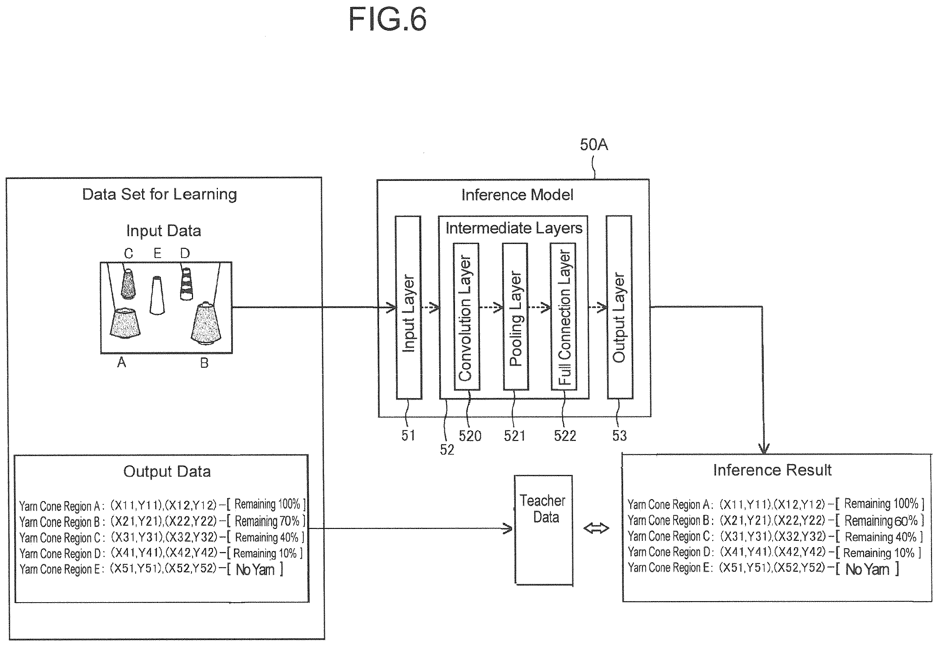

Next, the learning method in the machine-learning unit 62 using the multiple acquired data sets for learning will be described with reference to Fig. 6. Fig. 6 shows a CNN-based inference model 50A used in the machine-learning device 6A of the first embodiment.

The inference model 50A has an input layer 51, an intermediate layer 52, and an output layer 53. The inference model 50A detects objects in the image (object detection) and detects the status of the detected objects (status detection). When an image contains multiple objects, object detection and status detection are performed for each object.

The input layer 51 has a number of neurons corresponding to pixels in the image as the input data, and the pixel value of each pixel is inputted to each neuron.

The intermediate layer 52 comprises convolution layers 520, pooling layers 521 and full connection layer 522. The convolution layer 520 and the pooling layer 521 are, for example, provided in alternating layers. The convolution layers 520 and the pooling layers 521 extract features from the image input via the input layer 51. The full connection layer 522 transforms the features extracted from the image by the convolution layers 520 and the pooling layers 521 using, for example, an activation function into characteristic vector. The full connection layer 522 may have multiple layers.

The output layer 53 outputs output data including the object detection results and the status detection results, as the inference results based on the characteristic vector outputted from the full connection layer 522. The object detection result is, for example, information that identifies the region (e.g., rectangle, circle, etc.) that includes the detected object. In the case of a rectangle, the lower left and upper right coordinates may be specified, and the center coordinates, width and height may be specified alternatively. The status detection result is, for example, information indicating the status of the detected object, and may be discrete or continuous values. In addition to them, the output data may include, for example, a score indicating the certainty of the estimation results.

Between the layers of the inference model 50A, there are synapses connecting the neurons in the layers. Synapses in the convolutional layer 520 and the full connection layer 522 of the intermediate layer 52 have weights associated with them.

The machine-learning unit 62 inputs the learning data set to the inference model 50A and learns the correlation between the yarn cone image 31 and the remaining amounts of yarns of cones 2 in yarn cone image 31. Specifically, the machine-learning unit 62 inputs the yarn cone image 31 which is part of the learning data set, as the input data to the input layer 51 of the inference model 50A. As a pre-processing step in inputting the yarn cone image 31 to the input layer 51, the machine-learning unit 62 may apply image adjustments (e.g., image format, image size, image filter, image mask, etc.) to the yarn cone image 31.

The machine-learning unit 62 iteratively adjusts the weights associated with each synapse (back-propagation) so that the value evaluated by the error function is smaller. To evaluate the error, an error function is used that compares the remaining amount of yarn (status detection result) indicated by the output data outputted from the output layer 53 as a result of inference with the remaining amount of yarn (teacher data) in this learning data set.

When the series of steps have been performed a predetermined number of times, or when the evaluated value of the error function is smaller than the allowable value, the machine-learning unit 62 terminates the learning, with assuming that the learning termination conditions have been met. The inference model 50A (all weights associated with each synapse) is then stored in the memory for learned model 63 as the learned model 5A.

### (Machine-learning Method)

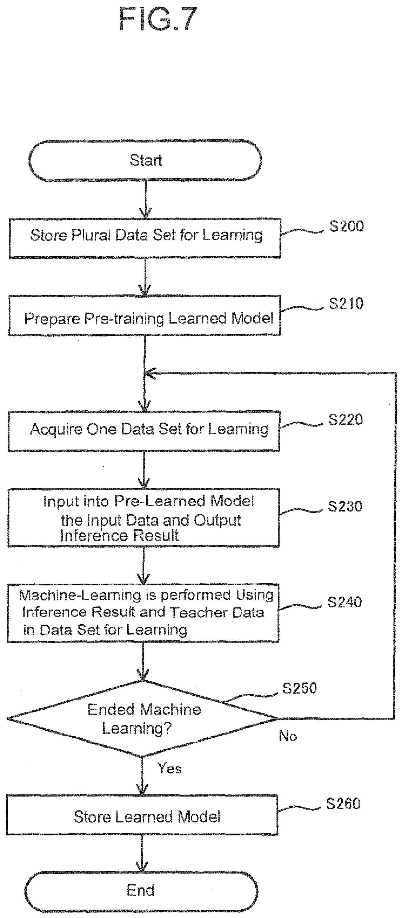

A machine-learning method corresponding to the machine-learning device 6A will be described with reference to Fig. 7. Fig. 7 is a flowchart showing an example of the machine-learning method for the first embodiment.

The machine-learning method shown below is executed by the machine-learning device 6A, for example. First, a desired number of data sets for learning are prepared as the preliminary preparation for starting the machine-learning. The prepared plurality of data sets for learning are stored in the memory 61 (step S200). The number of data sets for learning to be prepared is determined by considering the inference accuracy required for the final learned model 5A.

Several methods can be employed to prepare the data sets for learning. For example, during operation of the flat knitting machine 1, the cameras 3 are used to capture the image of the yarn cones 2 in various statuses. The operator inputs the remaining amounts of yarns in the cones 2 in the yarn cone image 31 using a terminal device 8 or the like, so as to associate them with the captured cone image 31. By repeating this process, the desired number of data sets for learning are prepared. In addition to this method, a learning data set may be obtained, for example, by using a camera for the data preparation to capture the image of the yarn cones 2 placed on a stand that simulates the top plate 15. In doing so, yarn cone image 31 are prepared for the learning data set, in various statuses of the remaining amounts of yarns such as with and without yarn. Preferably, the yarn cone image 31 are prepared including various yarn cones 2 with various positions, various outline shapes, and various outline sizes.

Next, an inference model 50A before learning is prepared (S210) to begin the learning in the machine-learning unit 62. The pre-training inference model 50A prepared here, for example, has the structure shown in Fig. 6, and the weight of each synapse is set to an initial value. From the plurality of data sets for learning stored in the memory 61, one learning data set is selected at random, for example (step S220). Input data in the selected learning data set is inputted to the inference model 50A before learning (step S230). In the learning data set shown in Fig. 6, the input data is the yarn cone image 31 that contains five cones 2 in the region identified by the five cone regions A to E (lower left and upper right coordinates), and the output data is the information regarding the five cones 2 in the five cone regions A to E with yarn of "100% remaining", "70% remaining %", "40% remaining", "10% remaining", and "no yarn".

In step S230, the neural network model before training infers the amount of yarn remaining (the result of the status detection). In most cases, the correct information is not inferred regarding the amounts of yarns remaining in the yarn cones 2. Therefore, machine-learning is performed (step S240) using the teacher data (remaining amount of yarn) in the learning data set obtained in step S220 and the remaining amount of yarn output in step S230.

The machine-learning here is back-propagation. For example, the process of comparing the remaining amount of yarn in the teacher data with the amount of yarn outputted from the output layer 53 and adjusting the weights assigned to each synapse in the inference model 50A to obtain a preferred inference model 50A. The format of the output data in the output layer 53 of the inference model 50A before learning is in the format similar to that of the teacher data.

In the inference result shown in Fig. 6, five cones 2 in five cone regions A-E (lower left and upper right coordinates) are detected in the yarn cone image 31. The amounts of yarns remaining in the five cone regions A-E are "100% remaining", "60% remaining", "40% remaining", "10% remaining" and "no yarn". The following are the remaining yarn amounts for the five cones in cone region A-E. There is an error with the teacher data for the amounts of yarns remaining in cones 2 in cone region B. Based on this error, the weights of the inference model 50A are adjusted.

Once the machine-learning is performed in step S240, a decision is made as to whether or not to continue machine-learning, e.g., based on the number of remaining untrained data sets for learning (step S250). The learning data set is stored in the memory 61. If the learning end condition is not met and machine-learning is to continue ("NO" in step S250), return to step S220. If the learning end condition is satisfied and machine-learning is terminated ("Yes" in step S250), move to step S260. If machine-learning is to continue, steps S220-S240 are performed multiple times on the inference model 50A being trained, using the untrained learning data set. The accuracy of the learned model 5A generated increases with this number of times.

When the machine-learning process is completed ("Yes" in step S250), the generated inference model 50A is stored in the memory for learned model 63 as the learned model 5A (step S260). In this way, the series of machine-learning processes are completed.

In the learning method and the machine-learning method of the machine-learning device 6A, the machine-learning process is repeatedly performed on one (pre-trained) inference model 50A to generate one learned model 5A. This improves the accuracy and generates a learned model 5A that can be applied to the image processing device 4A. However, the invention is not limited to this acquisition method. For example, a plurality of learned model 5A that has been subjected to the machine-learning a predetermined number of times are stored in advance in the learned model memory 63 as one candidate. For example, a data set for the determination of validity may be inputted to the multiple learning data set to generate values for the neurons in the output layer. Then, the accuracy of the values identified in the output layer are compared and considered, and the best learned model 5A to be applied to the image processing device 4A may be selected. The data set for the validation may comprise a data set similar to the learning data set and not having been used for training.

As described above, the machine-learning device 6A and the machine-learning method according to this embodiment can generate a learned model 5A that can accurately detect (estimate) the statuses (remaining amounts of yarns) of the yarn cones 2 from the camera-captured image 30 including one or plural cones 2.

### (Second Embodiment)

In the first embodiment, the machine-learning device 6A generates one learned model 5A. When the image processing device 4A inputs the camera-captured image 30 to the learned model 5A, the learned model 5A detects the remaining amounts of yarns of cones 2 in the camera-captured image 30. In contrast, in the second embodiment, the first and second machine-learning devices 6B1 and 6B2 generate the first and second learned models 5B1 and 5B2. In the image processing device 4B, the models SB1 and 5B2 are connected in series such that the first learned model 5B1 is the first stage and the second learned model 5B2 is the second stage. When a camera-captured image 30 is inputted to the first learned model 5B1, it detects the remaining amounts of yarns of cones 2 in the camera-captured image 30. The other basic structure and operation are the same as in the first embodiment. The characteristic parts of the second embodiment are described. The first and second machine-learning devices 6B1 and 6B2 are described as separate devices. However, the first and second machine-learning devices 6B1 and 6B2 may be a single device.

### (Image Processing Device 4B)

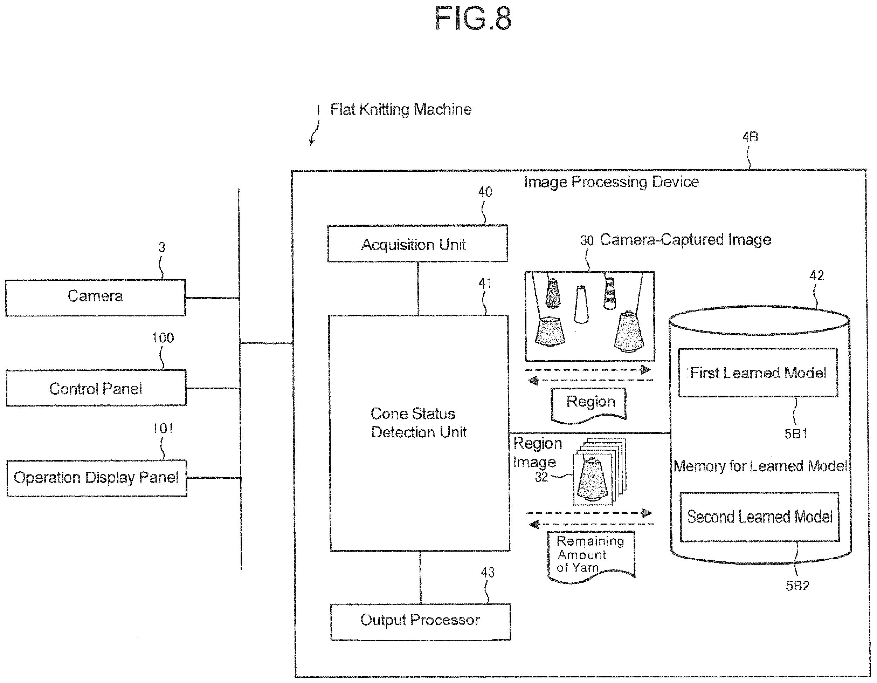

Fig. 8 is a schematic block diagram of a flat knitting machine 1 equipped with an image processing device 4B according to the second embodiment. A first learned model 5B1 and a second learned model 5B2 are stored in the memory for learned model 42 of the image processing device 4B.

The first learned model 5B1 is generated by the first machine-learning device 6B1 and the machine-learning method. The first learned model 5B1 has machine-learned to correlate a cone image 31 containing an arbitrary number of cones 2 with regions in the yarn cone image 31 that contains only one yarn cone 2.

The second learned model 5B2 is generated by the second machine-learning device 6B2 and the machine-learning method. The second learned model 5B2 learns correlation between a single cone image 33 containing one yarn cone 2 and the remaining amount of yarn of the yarn cone 2 in the single cone image 33.

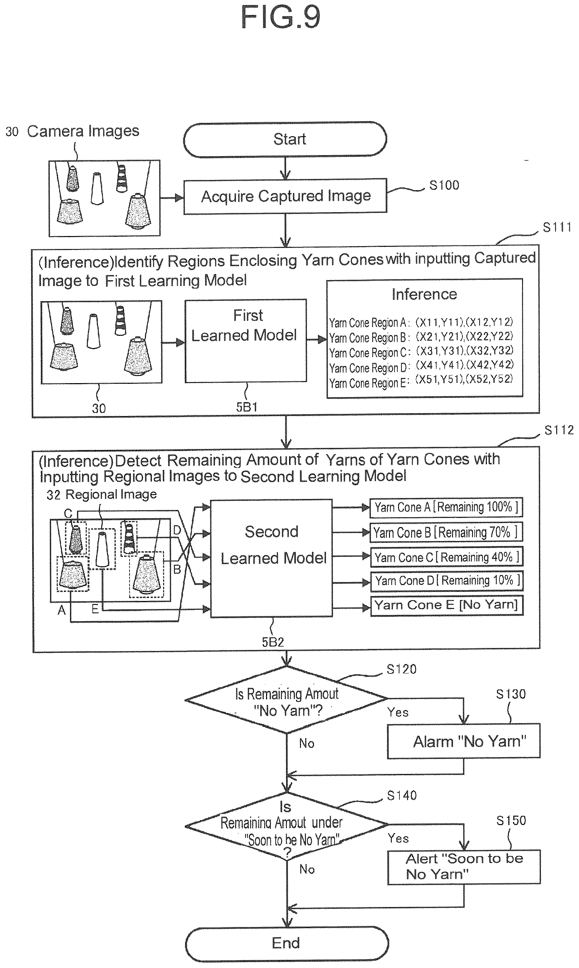

Fig. 9 is a flowchart, showing the image processing method by the image processing device 4B for the second embodiment.

At a predetermined timing, the acquisition unit 40 acquires a camera-captured image 30 in which the yarn cones 2 on the top plate 15 are captured by the camera 3 (step S100).

The yarn cone status detection unit 41 performs inference using the first learned model 5B1 stored in the memory for learned model 42 (step S111). Specifically, the yarn cone status detection unit 41 inputs the camera-captured image 30 acquired by the acquisition unit 40 into the first learned model 5B1. The first learned model 5B1 identifies one or more regions, each containing one yarn cone 2 in the camera-captured image 30. In the inference result of step S111 shown in Fig. 9, five cones 2 are detected in the camera-captured image 30; cone regions A-E containing the five cones 2 are identified with two coordinates, the lower left coordinate and the upper right coordinate.

The yarn cone status detection unit 41 performs inference (step S112) using the second learned model 5B2 stored in the memory for learned model 42. Specifically, the yarn cone status detection unit 41 inputs to the second learned model 5B2 a region image 32 that includes one yarn cone 2 of the camera-captured image 30 acquired by the acquisition unit 40. By doing so, the second learned model detects the remaining amount of yarn in the one yarn cone 2 included in the region image 32. The inference result of step S112 shown in Fig. 9 estimates the amounts of yarns remaining in the five cones from the five regional image 32 corresponding to the five cone regions A-E (identified by the lower left and upper right coordinates). The amounts of yarns remaining in the four cones 2 in cone regions A-D (lower left and upper right coordinates) are "100% remaining," "70% remaining," "40% remaining," and "10% remaining"; the amount of yarn remaining in cone region E is "no yarn."

In steps S111 and S112, the yarn cone status detection unit 41 makes inferences. If the detection result of the amount of yarn remaining for any of cones 2 is "no yarn" ("Yes" in step S120), the output processor 43 reports "no yarn" (step S130). If the detection result of the amount of yarn remaining for any of the 2 cones is less than or equal to the alert level ("Yes" in step S140), the output processor 43 reports "no yarn alert" (step S150). If the detection result of the amounts of yarns remaining for all cones 2 is neither "no yarn" nor "no yarn alert", i.e., the detection result of the amounts of yarns remaining for all cones 2 is "with yarn" ("NO" in step S120 and "NO" in step S140), the image processing process is completed.

Similar to the image processing device 4A and the image processing method, the image processing device 4B and the image processing method according to the embodiment can detect the statuses of one or more cones 2 in the camera-captured image 30 (the remaining amount of yarn in this embodiment). Therefore, there is no need to install optical components for respective cones 2. The statuses of cones 2 can be detected without being restricted by the number or positions of cones 2 placed on or around the flat knitting machine. Thus, the statuses of cones 2 can be easily detected, with improved workability and versatility.

### (First machine-learning Device 6B1)

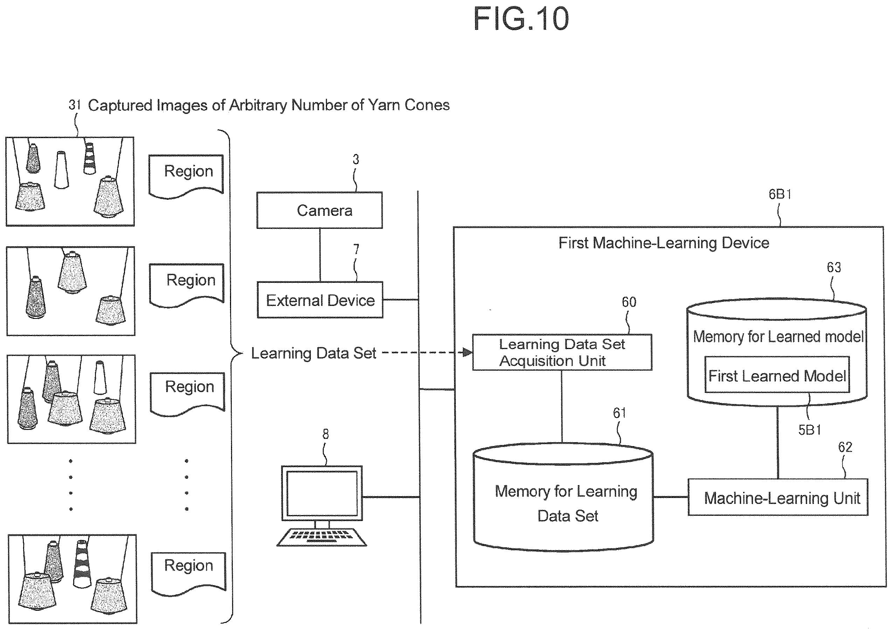

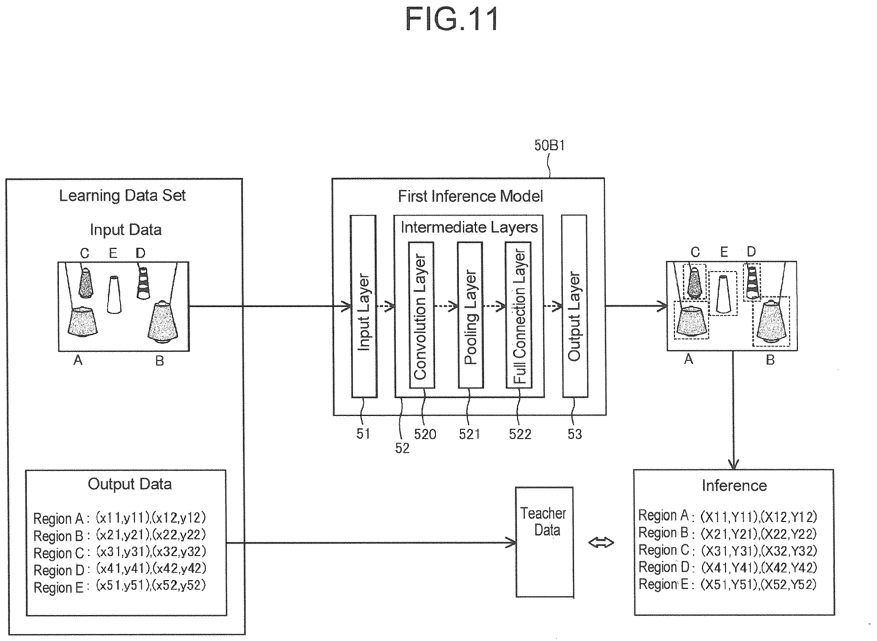

The first machine-learning device 6B1 detects the statuses of one or more cones 2 positioned on or around the top plate of the flat knitting machine 1 and will be described with reference to Figs. 10 and 11. Fig. 10 is a schematic block diagram of the first machine-learning device 6B1 for the second embodiment. Fig. 11 shows an example of a first inference model 50B1 based on a CNN used in the first machine-learning device 6B1 for the second embodiment.

The first machine-learning device 6B1 generates a learned model (first learned model 5B1) that can identify (estimate) an arbitrary number of regions enclosing one yarn cone 2 respectively in the cone image 31, based on the cone image 31 that includes one or more yarn cones 2.

The learning data set acquisition unit 60 obtains the yarn cone image 31 as the input data, for example, from an external device 7. The regions containing one yarn cone 2 respectively in the yarn cone image 31 are acquired as the output data, e.g., from the terminal device 8. By mapping these input and output data, a learning data set is formed and stored in the memory 61. In the learning data set shown in Fig. 11, the input data is the cone image 31 which contains five cones 2 in five cone regions A-E (identified by the lower left and upper right coordinates). The output data is information identifying cone regions A-E (identified by lower left and upper right coordinates) that contain one yarn cone 2 each. The input data which is part of the learning data set, may be a single cone image 33 containing one yarn cone 2.

The machine-learning unit 62 performs the machine-learning using the plurality of data sets for learning stored in the memory 61. This generates the learned model (first learned model 5B1) that infers correlation between input data and output data contained in the plurality of data sets for learning.

Specifically, the machine-learning unit 62 performs the machine-learning with learning the yarn cone image 31 which is part of the learning data set, and the yarn cone image 31 is inputted to the input layer 51 of the first inference model 50B1 shown in Fig. 11. The regions outputted from the output layer 53 as the inference result (object detection result) is compared with the regions where the yarn cones are present (the teacher data) that is part of the learning data set. For example, in the inference result shown in Fig. 11, five cones 2 are detected in five cone regions A-E (lower left and upper right coordinates are specified) from the cone image 31. The cone regions A-E, which contain five cones, are identified by their two points, namely, the lower left and upper right coordinates. If there is an error between the inference results and the teacher data for the cone regions A-E, the weights in the first inference model S0B1 are adjusted based on the error.

When the learning end condition is met and the machine-learning is completed, the machine-learning unit 62 stores the first inference model 50B1 as the first learned model 5B1 in the memory for learned model 63.

### (Second machine-learning Device 6B2)

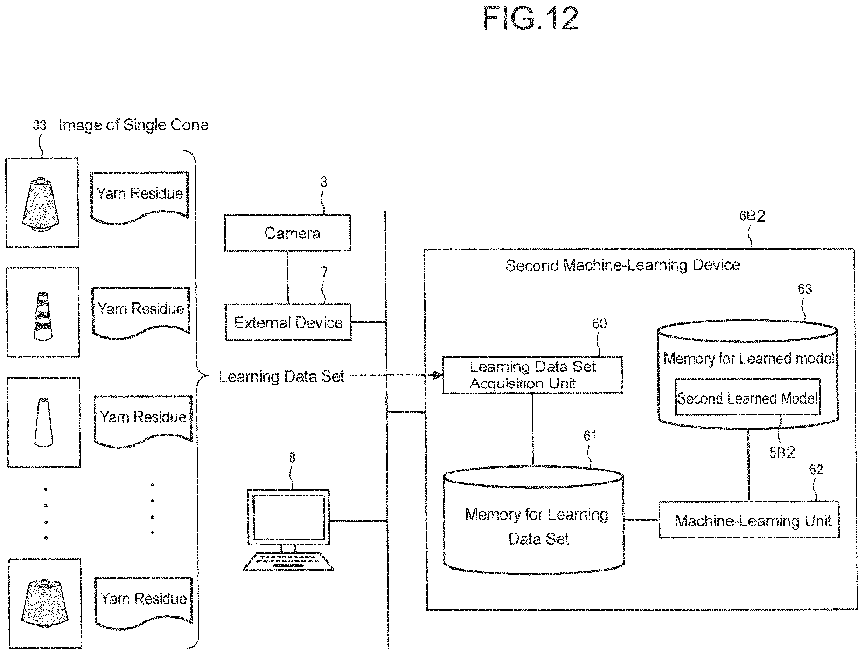

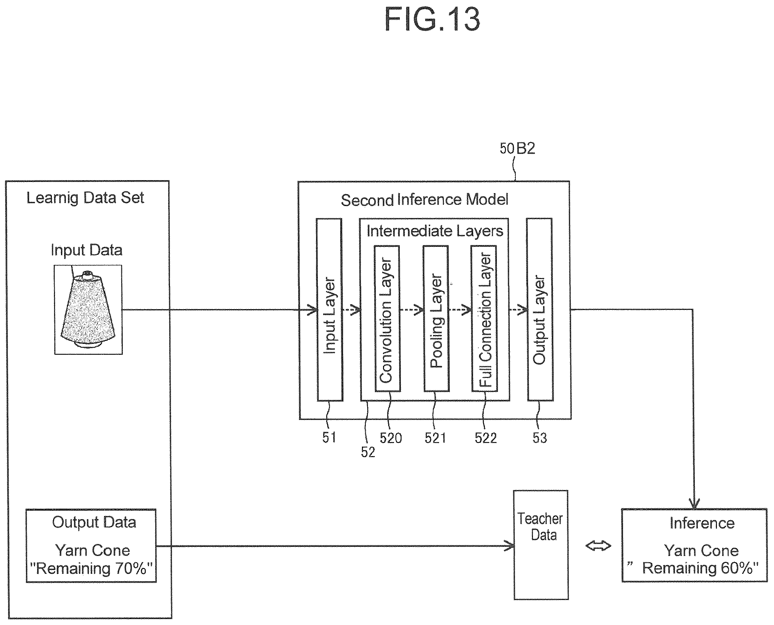

The second machine-learning device 6B2 detects the remaining amounts of yarns in one or more cones 2 located on or around the flat knitting machine 1 and will be described with reference to Figs. 12 and 13. Fig. 12 is a schematic block diagram of the second machine-learning device 6B2. Fig. 13 shows one example of a second inference model 50B2 based on a CNN used in the second machine-learning device 6B2.

The second machine-learning device 6B2 generates the learned model (second learned model 5B2) based on a single cone image 33 containing one yarn cone 2 and detects (estimates) the remaining amount of yarn of the one yarn cone 2 in the yarn cone image 33.

The learning data set acquisition unit 60 acquires the single cone image 33, as the input data, for example, from an external device 7. It also acquires output data indicating the amount of yarn remaining in the yarn cone 2 within the single cone image 33, for example, from the terminal device 8. By making these input data and output data correspond with each other, one learning data set is formed. It is stored in the memory for learning data set 61. In the learning data set illustrated in Fig. 13, the input data is the single cone image 33 containing only one yarn cone 2, and the output data is the information indicating that the amount of yarn remaining in the cone 2 is "70%."

The machine-learning unit 62 performs the machine-learning, using a plurality of learning data set stored in the memory 61. The machine-learning generates a learned model (second learned model 5B2) that infers correlation between the input data and the output data, both included in the plurality of learning data set.

Specifically, the machine-learning unit 62 inputs the single cone image 33 that forms the learning data set into the input layer 51 of the second inference model 50B2 shown in Fig. 13. Then, the output of the remaining amount of yarn (status detection result) outputted from the output layer 53 as the inference result is compared with the actual remaining amount of yarn (teacher data) in the learning data set. In this way, the machine-learning is conducted. The inference result illustrated in Fig. 13 shows that the yarn remaining amount of cone 2 in the single cone image 33 is inferred as "60%." Since there is an error between the teacher data regarding the remaining amount of yarn in cone 2, the weights of the second inference model 50B2 are adjusted based on the error.

When the learning end condition is satisfied, and machine-learning is finished, the machine-learning unit 62 stores the second inference model 50B2 as the second learned model 5B2 in the memory for learned data set 63.

The first and second machine-learning devices 6B1 and 6B2 and the machine-learning method of the present embodiment generate the first and second learned models 5B1 and 5B2 in the same manner as the first machine-learning device 6A and the first machine-learning method. The first and second learned models 5B1 and 5B2 and the machine-learning method can accurately detect (estimate), from the camera-captured image 30 including the arbitrary number of yarn cones 2, the status (in this embodiment, the yarn residue) of the yarn cones 2 in the image 30.

In particular, the first machine-learning device 6B1 generates a first learned model 5B1 such that it identifies regions surrounding one yarn cone 2 respectively in the camera-captured image 30. The second machine-learning device 6B2 generates a second learned model 5B2 for detecting the statuses of the respective cones 2. Therefore, there is no need to prepare a large number of images with various combinations of conditions as the necessary learning data set. A learning data set that is suitable for each of the first and second learned models 5B1 and 5B is thus simply prepared. This reduces the time and effort required to prepare the learning data set and improves the inference accuracy by the first and second learned models 5B1 and 5B2.

### (Third Embodiment)

In the first embodiment, the machine-learning device 6A generates the learned model 5A, and the image processing device 4A detects the remaining amount of yarn in cone 2 in the camera-captured image 30, with inputting the camera-captured image 30 to the learned model 5A. In the third embodiment, the machine-learning device 6C generates a learned model 5C, and the image processing device 4C inputs the camera-captured image 30 to the learned model 5C. The learned model 5C detects the connections between the yarn cones 2 and the tensioning devices 16 in the camera-captured image 30. Other points are the same as in the first embodiment. In the following, the characteristics of the third embodiment will be described.

### (Image processing device 4C)

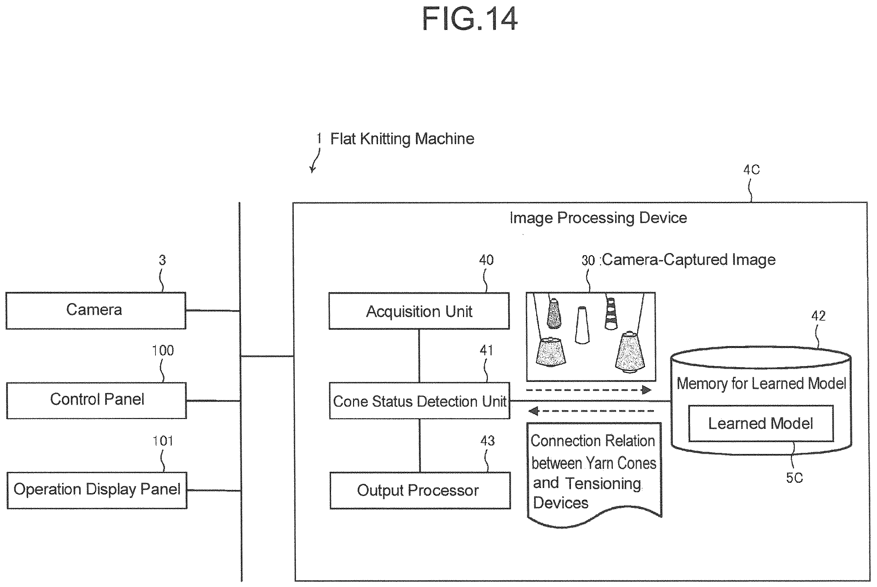

Fig. 14 is a schematic block diagram showing a flat knitting machine 1 equipped with the image processing device 4C of the third embodiment. The learned model 5C is stored in the memory for learned model 42 of the image processing device 4C.

The learned model 5C has performed the machine-learning, using the machine-learning device 6C and the corresponding machine-learning method, and is capable of correlating the cone image 31 including one or more cones 2 and the connections between the one or more cones 2 and the tensioning devices 16. Specifically, the yarn cone image 31 includes one or more cones 2 and the yarns 20 that are unrolled from the cones 2 and connected to the tensioning devices 16, as shown in Fig. 2. The learned model 5C extracts, from the yarn cone image 31, the position of each cone 2, the direction in which the yarn 20 is unrolled from each cone 2 and extends, and the characteristic quantities that exist in the direction where the yarn 20 extends and learns them, for identifying the connections between the yarn cones 2 and the tensioning devices 16. The aforementioned characteristic quantities are obtained in a range till the yarn reaches the tensioning device 16.

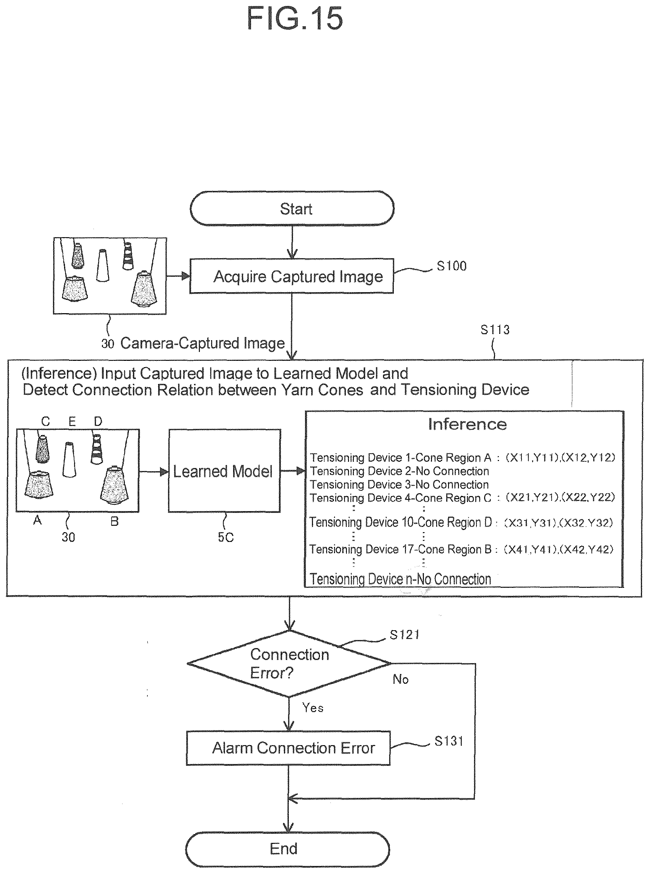

Fig. 15 is a flowchart showing the image processing method according to the third embodiment of the image processing device 4C. It is assumed that there are n-tensioning devices 16 and that the devices are numbered "1, 2, 3, ..., n" in order from the left to the right, for example.

At a predetermined timing, the acquisition unit 40 acquires a camera-captured image 30 in which cones 2 on the top plate 15 are captured by the camera 3 (step S100).

The yarn cone status detection unit 41 refers to the learned model 5C stored in the memory for learned model 42 and performs the inference process using the learned model 5C (step S113). The yarn cone status detection unit 41 inputs the camera-captured image 30 acquired by the acquisition unit 40 to the learned model 5C. Then, the positions of one or more cones 2, the directions in which the yarns 20 are unrolled from cones 2 and extend, and the characteristic quantities that exist in the direction in which the yarns 20 extend are extracted in a range till the tensioning devices 16. These data are used to detect the connections between the yarn cones 2 and the tensioning devices 16 in the camera-captured image 30.

In the inference result of step S113, shown in Fig. 15, five cones 2 in five cone regions A-E are detected from the camera-captured image 30. The regions are indicated by the lower left and upper right coordinates of the square regions. The yarn 20 extending from the cone 2 in the cone region A is connected to the first tensioning device 16, the yarn 20 extending from the cone 2 in the cone region C is connected to the fourth tensioning device 16, the yarn 20 extending from the cone 2 in the cone region D is connected to the 10th tensioning device 16, and the yarn 20 extending from the cone 2 in the cone region B is connected to the 17th tensioning device 16. The yarn cone 2 in the cone region E has no yarn and is detected as not connected to a tensioning device 16.

The output processor 43 determines whether the connection between the yarn cones 2 and the tensioning devices 16 detected by the yarn cone status detection unit 41 in step S113 matches the connection in the knitting data of the flat knitting machine 1. If the connections do not match between them ("Yes" in step S121), the operator is informed that a "work error" has occurred (step S131). On the other hand, if the output processor 43 determines that the connections are correct ("NO" in step S121), the image processing process is finished.

According to the image processing device 4C and the image processing method according to the embodiment, the statuses of one or more cones 2 in the camera-captured image 30 can be detected. In particular, the connections between the cones 2 and the tensioning devices 16 can be detected. Therefore, there is no need to provide optical components for respective cones 2. The statuses of the cones 2 can be detected without restrictions such as the number and positions of the, cones 2 on or around the knitting machine. Therefore, the statuses of the cones 2 can be easily detected, with improved workability and versatility.

### (Machine-learning Device 6C)

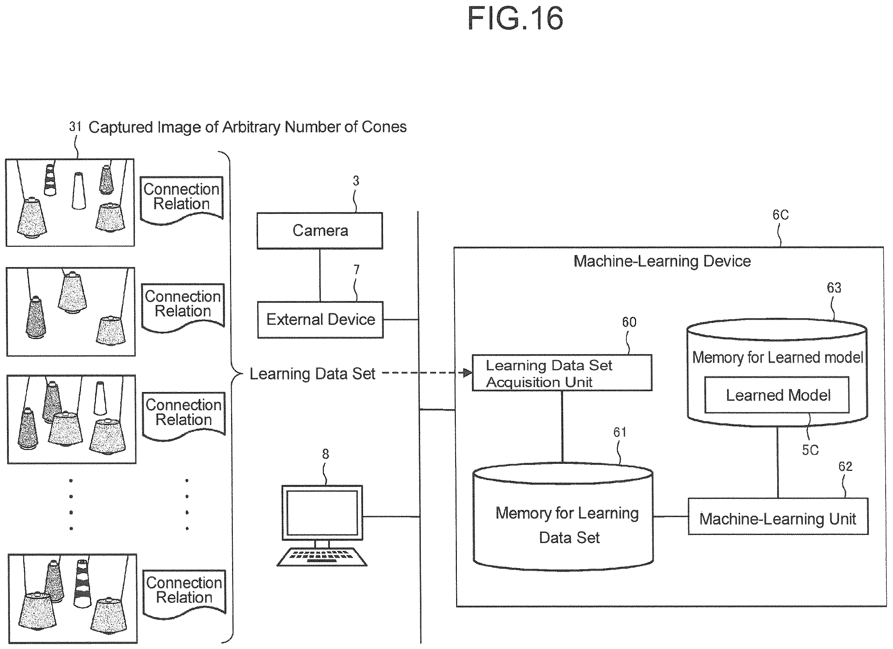

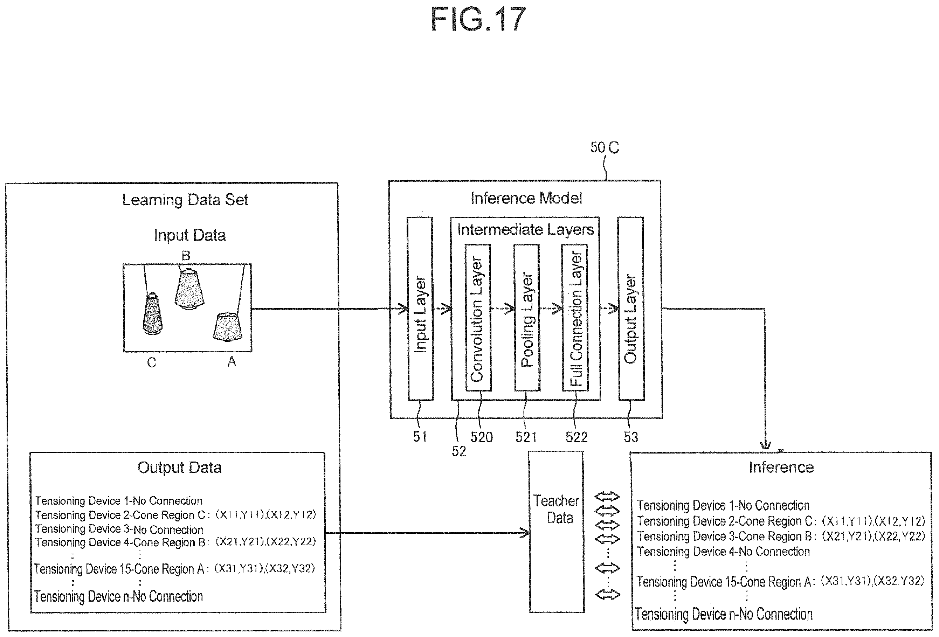

The machine-learning device 6C detects the connection between the yarn cones located on or around the flat knitting machine 1 and the tensioning devices and will be described with reference to Figs. 16 and 17. Fig. 16 is a schematic block diagram of the machine-learning device 6C for the third embodiment. Fig. 17 shows an example of a CNN-based inference model 50C used in the machine-learning device 6C according to the third embodiment.

The machine-learning apparatus 6C uses, as the input data, the cone image 31 including an arbitrary number of cones 2. The machine-learning device 6C generates a learned model (learned model 5C) that is capable of detecting (estimation) the correlation between the yarn cones 2 in the image 31 and their connections to the tensioning devices 16.

The learning data set acquisition unit 60 acquires the yarn cone image 31 as the input data, for example, from the external device 7, and acquires the connections between the yarn cones 2 and the tensioning devices 16 in the yarn cone image 31 as the output data, for example, from the terminal device 8. Then, by making these input data and output data corresponding, the learning data set is formed and stored in the memory 61. In the learning data set illustrated in Fig. 17, the input data is the yarn cone image 31. Three cones 2 are included in regions defined by the three cone regions A to C (designated by the lower left and upper right coordinates of squares), and the output data is that the yarn cone 2 in the cone region C is connected to the "2nd" tensioning device 16, the yarn cone 2 in the cone region B is connected to the "4th" tensioning device 16, and the yarn cone 2 in the cone region A is connected to the "15th" tensioning device 16.

The machine-learning unit 62 learns a plurality of learning data set stored in the memory 61 for machine-learning and generates the learned model (learned model 5C) that infers the correlation between the input data and the output data.

Specifically, in the machine-learning unit 62, the yarn cone image or cone image 31 in the learning data set are inputted into the input layer 51 of the inference model 50C shown in Fig. 17. The inferred connection relation (the detection result of the relevant status) is outputted from the output layer 53 as the inference result. The output is compared with the correct connection data in the learning data set (the teacher data). Thus, the machine-learning is performed. The inference result illustrated in Fig. 17 shows that the three cones 2 are present in the three cone regions A to C in the yarn cone image 31: the yarn cone 2 in the cone region C is connected to the 2nd tensioning device, the yarn cone 2 in the cone region B is connected to the third tensioning device, and the yarn cone 2 in the cone region A is connected to the fifteenth tensioning device. The regions are indicated by the lower left and upper right coordinates of squares. There is an inconsistency with the teacher data regarding the connection of the cone 2 in the cone region B, and the weights of inference model 50C are adjusted based on this error.

When the machine-learning is finished due to the satisfaction of learning end conditions, the machine-learning unit 62 stores the inference model 50C in the memory for learned model 63 as the learned model 5C.

In this embodiment, the output layer 53 of the inference model 50C makes the n-tensioning devices 16 correspond to the yarn cone regions by assigning the serial numbers (identification information) of the tensioning devices 16 to the yarn cone regions. However, the output layer 53 may assign the regions of cone 2 with the serial numbers of tensioning devices 16 connected to cones 2. In such cases, the format of the output data in the learning data set is changed according to the data format of the output layer 53.

As described above, according to the machine-learning device 6C and the machine-learning method according to this embodiment, from the camera-captured image 30 containing an arbitrary number of cones 2, the learned model 5C is generated such it is capable of accurately detecting (estimating) the statuses of the arbitrary number of cones 2 included in a camera-captured image 30, in particular in this embodiment, the connection between the yarn cones 2 and the tensioning devices 16.

### (Inference Device)

For example, the present invention can be carried out using the inference devices 5A, 5B1, 5B2, and 5C, instead of using the image processing devices 4A-4C. In that case, the inference devices 5A, 5B1, 5B2, and 5C include a memory and at least one processor, and the processor executes the series of processes. The series of processes include the process where a camera-captured image 30 including one or plural cones is captured, and the process where, upon input of the camera-captured image 30, the statuses of the yarn cones 2 in the camera-captured image 30 is inferred. For example, the remaining yarn amounts in the yarn cones, the connections between the yarn cones and the tensioning devices, and the positions where the yarn cones are located, etc. are inferred. The inference devices 5A, 5B1, 5B2, and 5C described above can be more easily implemented to various devices than the image processing devices 4A-4C. When inferring the statuses of cones 2, the learned models 5A, 5B1, 5B2, and 5C, which have been machine-learned by the machine-learning device 6A, 6B1, 6B2, 6A and the machine-learning method, are usable, and the inference method used by the yarn cone status detection unit 41 in the image processing devices 4A-4C is usable.

In the above embodiments, the image processing apparatuses 4A-4C are described as implemented in the flat knitting machines 1A-1C. However, the image processing devices 4A-4C may be implemented in any type of knitting machine, such as a circular knitting machine and a warp knitting machine. The image processing devices 4A-4C may, for example, be installed on the knitting machines at the factory where the machine is manufactured, or may be fitted to the knitting machine after shipment from the factory. Further, the functions of the image processing devices 4A-4C may be implemented to the control panels 100 of the knitting machines after shipment from the factory.

In the above embodiments, the image processing devices 4A-4C are described as performing the inference using the learning data set as the image processing for the camera-captured image 30. However, the image processing devices 4A-4C may perform pattern recognitions, such as pattern matching, using recognition parameters indicating the features of cone 2 in the camera-captured image 30.

The above embodiments use the inference models 50A, 50B1, 50B2, and 50C based on CNN, as the learning method for machine-learning. However, other learning methods can be used. For example, neural networks, ensemble learning (random forest, boosting, etc.), R-CNN (Region-based Convolutional Neural Network), a type of CNN, Fast-R-CNN, Faster-R-CNN, YOLO (You Only Look Once), SSD (Single Shot multi-box Detector) may be used. In this case, the data format of the input data for the input layer 51 and the output data from the output layer 53 may be changed as appropriate.

### Description of Symbols

| | | | | | |
|---|---|---|---|---|---|
| 1: | flat knitting machine, | 2, 2A-2E: | yarn cone, | 3: | camera, |
| 4A-4C: | image processing device, | 5A: | learned model, | SB1: | first learned model, |
| 5B2: | second learned model, | 5C: | learned model, | | |
| 6A: | machine-learning device, | 6B1: | first machine-learning device, | | |
| 6B2: | second machine-learning device, | 6C: | machine-learning device, | | |
| 7: | external device, | 8: | terminal device, | | |
| 11A: | lower frame, | 11B: | upper frame, | | |
| 12: | knitting needle | 13 | needle bed, | 14: | carriage, |
| 15: | top plate, | 16: | tensioning device | 17: | side tension device |
| 18: | yarn feeder | 20: | knitting yarns, | 18: | yarn feeder |
| 21: | core, | 30: | camera-captured image, | | |
| 31: | cone image, | 33: | image of single cone, | | |
| 40: | acquisition unit, | 41: | yarn cone status detection unit, | | |
| 42: | memory for learned model, | 43: | output processor, | | |
| 50A: | inference model, | 50B1: | first inference model, | | |
| 50B2: | second inference model, | 50C: | inference model, | | |
| 51: | input layer, | 52: | intermediate layer, | 53: | output layer, |
| 60: | learning data set acquisition unit, | 61: | memory for learning data set, | | |
| 62: | machine-learning unit, | 63: | memory for learned model, | | |
| 100: | control panel, | 101: | operation display panel, | | |
| 520: | convolution layer, | 521: | pooling layer, | | |
| 522: | full connection layer. | | | | |

## Claims

1. An image processing device configured to detect respective statuses of plural yarn cones (2, 2A-2E), arranged on a knitting machine main body or at a periphery of the knitting machine main body, **characterized by**
an acquisition unit (40) for acquiring a captured image (30, 31) including plural yarn cones (2, 2A-2E), arranged on the knitting machine main body or at a periphery of the knitting machine main body; and
a yarn cone status detection unit (41) for detecting respective statuses of the plural yarn cones (2, 2A-2E) included in the captured image (30, 31) by applying image processing to the captured image (30, 31) acquired by the acquisition unit (40),
wherein said yarn cone status detection unit (41) is configured to detect respective residual amounts of yarns of the plural yarn cones (2, 2A-2E) in the captured image (30, 31) by applying said image processing to the captured image (30, 31), and
wherein said yarn cone status detection unit (41) is configured to:
identify plural regions (A-E) enclosing one yarn cone respectively, by inputting said captured image (30, 31) acquired by the acquisition unit (40) to a first learned model (5B1) which has machine-learned the correlation between a cone image (33) including one yarn cone (2) and the regions (A-E) respectively enclosing one yarn cone of the plural yarn cones (2, 2A-2E) in the captured image (30, 31), and
detect the respective residual amounts of yarns of said plural yarn cones (2, 2A-2E), one by one, in the captured image (30, 31), by inputting the cone image (33) including said one yarn cone (2) to a second learned model (5A, 5B2) which has machine-learned the correlation between the cone image (33) including one yarn cone (2) and the residual amount of yarn of the yarn cone in the cone image (33).

2. The image processing device according to claim 1, **characterized in that** said yarn cone status detection unit (41) is configured to detect respective connection relations between said plural yarn cones (2, 2A-2E) and a plurality of tensioning devices (16) by said image processing.

3. A knitting machine (1) comprising the image processing device (4A-4C) of claim 1 and the knitting machine main body.

4. The knitting machine (1) according to claim 3, **characterized in that** said yarn cone status detection unit (41) is further configured to detect the respective connection relations between said plural yarn cones (2, 2A-2E) and a plurality of tensioning devices (16) by said image processing.

5. The knitting machine (1) according to claim 4, **characterized in that** said yarn cone status detection unit (41) is configured to detect the respective connection relations between said plural yarn cones (2, 2A-2E) in the captured image (30, 31) and said plurality of tensioning devices (16), by inputting said captured image (30, 31) acquired by said acquisition unit (40) to a learned model (5C) which has machine-learned the correlation between the captured image (30, 31) including said plural yarn cones (2, 2A-2E) and the respective connection relations between said plural yarn cones (2, 2A-2E) and the plurality of tensioning devices (16).

6. The knitting machine (1) according to one of claims 3 to 5, **characterized in that** said image processing device (4A-4C) further comprises a machine-learning device (6A, 6B2) configured to detect the respective residual amounts of yarns of plural yarn cones (2, 2A-2E), arranged on the knitting machine main body or at the periphery of the knitting machine main body, and that
said machine-learning device (6A, 6B2) comprises:
a memory for learning data sets (61) for storing a plurality of learning data sets each of which comprises input data comprising the captured image (30, 31) including the plural yarn cones (2, 2A-2E) and output data mapped to the input data and comprising data of the respective residual amounts of yarns of the plural yarn cones (2, 2A-2E) in the captured image (30, 31);
a machine-learning unit (62) configured for machine-learning a model for inferring the correlation between the input data and the output data; and
a memory for learned model (63) storing the learned model (5A) which has been machine-learned by the machine-learning unit (62).

7. The knitting machine (1) according to one of claims 3 to 5, **characterized in that** said image processing device (4A, 4B) further comprises an inference device (5B2) configured to detect the respective residual amounts of yarns of plural yarn cones (2, 2A-2E), arranged on the knitting machine main body or at the periphery of the knitting machine main body, comprising a memory and at least a processor, and that
said at least a processor is configured to execute an input process for the captured image (30, 31) including the plural yarn cones (2, 2A-2E) and an inference process inferring the respective residual amounts of yarns of the plural yarn cones (2, 2A-2E) in the captured image (30, 31).

8. The knitting machine (1) according to one of claims 3 to 5, **characterized in that** said image processing device (4A, 4B) further comprises a machine-learning device (6A, 6B2) configured to detect the respective residual amounts of yarns of plural yarn cones (2, 2A-2E), arranged on the knitting machine main body or at the periphery of the knitting machine main body, and that
said machine-learning device (6A, 6B2) comprises:
a memory for learning data sets (61) for storing a plurality of learning data sets each of which comprises input data comprising the captured image (30, 31) including plural yarn cones (2, 2A-2E) and output data corresponding to said input data and comprising regional information identifying the plural regions (A-E) enclosing one yarn cone respectively in the captured image (30, 31);
a machine-learning unit (62) configured for machine-learning a model for inferring the correlation between said input data and said output data according to the input of said plural set of learning data set; and
a memory for learned model (63) storing the learned model (5A) after the machine-learning by said machine-learning unit (62).

9. The knitting machine (1) according to one of claims 3 to 5, **characterized in that** said image processing device (4A, 4B) further comprises an inference device (5A, 5B1, 5B2, 5C) configured to detect the respective statuses of plural yarn cones (2, 2A-2E), arranged on the knitting machine main body or at the periphery of the knitting machine main body,
said inference device (5A, 5B1, 5B2, 5C) comprising a memory and at least a processor, and that
said at least a processor is configured to execute an input process for the captured image (30, 31) including the plural yarn cones (2, 2A-2E) and an inference process inferring the regional information identifying the plural regions (A-E) enclosing one yarn cone respectively in the captured image (30, 31).

10. The knitting machine (1) according to one of claims 3 to 5, **characterized in that** said image processing device (4A, 4B) further comprises a machine-learning device (6A, 6B2) configured to detect the respective residual amounts of yarns of the plural yarn cones (2, 2A-2E), arranged on the knitting machine main body or at the periphery of the knitting machine main body and that
said machine-learning device (6A, 6B2) comprises: a memory for learning data sets (61) storing a plurality of learning data sets each of which comprises input data comprising the cone image (33) including one yarn cone (2) and output data corresponding to said input data and comprising the residual amount of yarn of the yarn cone (2, 2A-2E) in the cone image (33);
a machine-learning unit (62) configured for machine-learning a model for inferring the correlation between said input data and said output data according to the input of said plural set of learning data set; and
a memory for learned model (63) storing the learned model (5B2) after the machine-learning by said machine-learning unit (62).

11. The knitting machine (1) according to one of claims 3 to 5, **characterized in that** said image processing device (4A, 4B) further comprises an inference device (5A) configured to detect the respective residual amounts of yarns of plural yarn cones (2, 2A-2E), arranged on the knitting machine main body or at the periphery of the knitting machine main body, comprising a memory and at least a processor, and that
said at least a processor is configured to execute an input process for the cone image (33) including one yarn cone (2) and
an inference process inferring the residual amount of yarn of the yarn cone in the captured image.

12. The knitting machine (1) according to one of claims 3 to 5, **characterized in that** said image processing device (4C) further comprises a machine-learning device (6C) configured to detect the respective connection relations between the plural yarn cones (2, 2A-2E), arranged on the knitting machine main body or at the periphery of the knitting machine main body, and plural tensioning devices (16), and that
said machine-learning device (6C) comprises:
a memory for learning data sets (61) storing a plurality of learning data sets each of which comprises input data comprising the captured image (30, 31) including the plural yarn cones (2, 2A-2E) and output data corresponding to said input data and comprising respective connection relations between said plural yarn cones (2, 2A-2E), and the plural tensioning devices (16) in the captured image (30, 31),
a machine-learning unit (62) configured for machine-learning a model for inferring the correlation between said input data and said output data according to the input of said plural set of learning data set, and
a memory for learned model (63) storing the learned model (5C) after the machine-learning by said machine-learning unit (62).

13. The knitting machine (1) according to one of claims 3 to 5, **characterized in that** said image processing device (4C) further comprises an inference device (5C) configured to detect respective connection relations between plural yarn cones (2, 2A-2E), arranged on the knitting machine main body or at the periphery of the knitting machine main body, and plural tensioning devices (16), wherein said inference device (5C) comprises a memory and at least a processor, and that
said processor is configured to execute an input process for the captured image (30, 31) including plural cones (2A-2E) and an inferring process for inferring the respective connection relations between said plural yarn cones (2, 2A-2E) and the plural tensioning devices (16) in the captured image (30, 31).

## Patentansprüche

1. Eine Bildverarbeitungsvorrichtung, die konfiguriert ist zum Erfassen von entsprechenden Zuständen mehrerer Fadenkonen (2, 2A-2E), die in einem Strickmaschinen-Hauptkörper oder an einer Peripherie des Strickmaschinen-Hauptkörpers angeordnet sind, **gekennzeichnet durch**:
eine Erhaltungseinheit (40) zum Erhalten eines aufgenommenen Bilds (30, 31), das mehrere an dem Strickmaschinen-Hauptkörper oder an einer Peripherie des Strickmaschinen-Hauptkörpers angeordnete Fadenkonen (2, 2A-2E) enthält, und
eine Fadenkonenzustand-Erfassungseinheit (41) zum Erfassen von entsprechenden Zuständen der mehreren in dem aufgenommenen Bild (30 31) enthaltenen Fadenkonen (2, 2A-2E) **durch** das Anwenden einer Bildverarbeitung auf das **durch** die Erhaltungseinheit (40) erhaltene aufgenommene Bild (30, 31),
wobei die Fadenkonenzustand-Erfassungseinheit (41) konfiguriert ist zum Erfassen von entsprechenden Restfadenmengen der mehreren Fadenkonen (2, 2A-2E) in dem aufgenommenen Bild (30, 31) **durch** das Anwenden einer Bildverarbeitung auf das aufgenommene Bild (30, 31), und
wobei die Fadenkonenzustand-Erfassungseinheit (41) konfiguriert ist zum:
Identifizieren von mehreren Bereichen (A-E), die jeweils eine Fadenkone enthalten, **durch** das Eingeben des **durch** die Erhaltungseinheit (40) erhaltenen aufgenommenen Bilds (30, 31) in ein erstes gelerntes Modell (5B1), das die Korrelation zwischen einem Konenbild (33), das eine Fadenkone (2) enthält, und den Bereichen (A-E), die jeweils eine Fadenkone der mehreren Fadenkonen (2, 2A-2E), in dem aufgenommenen Bild (30, 31) enthalten, maschinell gelernt hat, und
Erfassen der entsprechenden Restfadenmengen der mehreren Fadenkonen (2, 2A-2E) nacheinander in dem aufgenommenen Bild (30, 31) durch das Eingeben des die eine Fadenkone (2) enthaltenden Konenbilds (33) in ein zweites gelerntes Modell (5A, 5B2), das die Korrelation zwischen dem die eine Fadenkone (2) enthaltenden Konenbild (33) und der Restfadenmenge der Fadenkone in dem Konenbild (33) maschinell gelernt hat.

2. Bildverarbeitungsvorrichtung nach Anspruch 1, **dadurch gekennzeichnet, dass** die Fadenkonenzustand-Erfassungseinheit (41) konfiguriert ist zum Erfassen von entsprechenden Verbindungsbeziehungen zwischen den mehreren Fadenkonen (2, 2A-2E) und einer Vielzahl von Spannvorrichtungen (16) mittels der Bildverarbeitung.

3. Eine Strickmaschine (1), die die Bildverarbeitungsvorrichtung (4A-4C) von Anspruch 1 und den Strickmaschinen-Hauptkörper aufweist.

4. Strickmaschine (1) nach Anspruch 3, **dadurch gekennzeichnet, dass** die Fadenkonenzustand-Erfassungseinheit (41) weiterhin konfiguriert ist zum Erfassen der entsprechenden Verbindungsbeziehungen zwischen den mehreren Fadenkonen (2, 2A-2E) und einer Vielzahl von Spannvorrichtungen (16) mittels der Bildverarbeitung.

5. Strickmaschine (1) nach Anspruch 4, **dadurch gekennzeichnet, dass** die Fadenkonenzustand-Erfassungseinheit (41) konfiguriert ist zum Erfassen der entsprechenden Verbindungsbeziehungen zwischen den mehreren Fadenkonen (2, 2A-2E) in dem aufgenommenen Bild (30, 31) und der Vielzahl von Spannvorrichtungen (16) durch das Eingeben des durch die Erhaltungseinheit (40) erhaltenen aufgenommenen Bilds (30, 31) in ein gelerntes Modell (5C), das die Korrelation zwischen dem aufgenommenen Bild (30, 31), das die mehreren Fadenkonen (2, 2A-2E) enthält, und den entsprechenden Verbindungsbeziehungen zwischen den mehreren Fadenkonen (2, 2A-2E) und der Vielzahl von Spannvorrichtungen (16) maschinell gelernt hat.

6. Strickmaschine (1) nach einem der Ansprüche 3 bis 5, **dadurch gekennzeichnet, dass** die Bildverarbeitungsvorrichtung (4A-4C) weiterhin eine Maschinelles-Lernen-Vorrichtung (6A, 6B2) aufweist, die konfiguriert ist zum Erfassen der entsprechenden Restfadenmengen der mehreren Fadenkonen (2, 2A-2E), die an dem Strickmaschinen-Hauptkörper oder an der Peripherie des Strickmaschinen-Hauptkörpers angeordnet sind, wobei die Maschinelles-Lernen-Vorrichtung (6A, 6B2) aufweist:
einen Speicher (61) für Lerndatensätze zum Speichern einer Vielzahl von Lerndatensätzen, die jeweils Eingabedaten, die das die mehreren Fadenkonen (2, 2A-2E) enthaltende aufgenommene Bild (30, 31) umfassen, und Ausgabedaten, die auf die Eingabedaten gemappt sind und Daten der entsprechenden Restfadenmengen der mehreren Fadenkonen (2, 2A-2E) in dem aufgenommenen Bild (30, 31) umfassen, aufweisen,
eine Maschinelles-Lernen-Einheit (62), die konfiguriert ist zum maschinellen Lernen eines Modells für das Ableiten der Korrelation zwischen den Eingabedaten und den Ausgabedaten, und
einen Speicher (63) für ein gelerntes Modell, der das gelernte Modell (5A), das durch die Maschinelles-Lernen-Einheit (62) maschinell gelernt wurde, speichert.

7. Strickmaschine (1) nach einem der Ansprüche 3 bis 5, **dadurch gekennzeichnet, dass** die Bildverarbeitungsvorrichtung (4A, 4B) weiterhin eine Ableitungsvorrichtung (5B2) aufweist, die konfiguriert ist zum Erfassen der entsprechenden Restfadenmengen mehrerer Fadenkonen (2, 2A-2E), die an dem Strickmaschinen-Hauptkörper oder an der Peripherie des Strickmaschinen-Hauptkörpers angeordnet sind, und einen Speicher und wenigstens einen Prozessor aufweist,
wobei der wenigstens eine Prozessor konfiguriert ist zum Ausführen eines Eingabeprozesses für das aufgenommene Bild (30, 31), das die mehreren Fadenkonen (2, 2A-2E) enthält, und eines Ableitungsprozesses, der die entsprechenden Restfadenmengen der mehreren Fadenkonen (2, 2A-2E) in dem aufgenommenen Bild (30, 31) ableitet.

8. Strickmaschine (1) nach einem der Ansprüche 3 bis 5, **dadurch gekennzeichnet, dass** die Bildverarbeitungsvorrichtung (4A, 4B) weiterhin eine Maschinelles-Lernen-Vorrichtung (6A, 6B2) aufweist, die konfiguriert ist zum Erfassen der entsprechenden Restfadenmengen mehrerer Fadenkonen (2, 2A-2E), die an dem Strickmaschinen-Hauptkörper oder an der Peripherie des Strickmaschinen-Hauptkörpers angeordnet sind, wobei die Maschinelles-Lernen-Vorrichtung (6A, 6B2) aufweist:
einen Speicher (61) für Lerndatensätze zum Speichern einer Vielzahl von Lerndatensätzen, die jeweils Eingabedaten, die das die mehreren Fadenkonen (2, 2A-2E) enthaltende aufgenommene Bild (30, 31) umfassen, und Ausgabedaten, die den Eingabedaten entsprechen und Bereichsinformationen für das Identifizieren der jeweils eine Fadenkone in dem aufgenommenen Bild (30, 31) enthaltenden mehreren Bereiche (A-E) umfassen, aufweisen,
eine Maschinelles-Lernen-Einheit (62), die konfiguriert ist zum maschinellen Lernen eines Modells für das Ableiten der Korrelation zwischen den Eingabedaten und den Ausgabedaten gemäß der Eingabe der mehreren Lerndatensätze, und
einen Speicher (63) für ein gelerntes Modell, der das gelernte Modell (5A) nach dem maschinellen Lernen durch die Maschinelles-Lernen-Einheit (62) speichert.

9. Strickmaschine (1) nach einem der Ansprüche 3 bis 5, **dadurch gekennzeichnet, dass** die Bildverarbeitungsvorrichtung (4A, 4B) weiterhin eine Ableitungsvorrichtung (5A, 5B1, 5B2, 5C) aufweist, die konfiguriert ist zum Erfassen der entsprechenden Zustände mehrerer Fadenkonen (2, 2A-2E), die an dem Strickmaschinen-Hauptkörper oder an der Peripherie des Strickmaschinen-Hauptkörpers angeordnet sind,
wobei die Ableitungsvorrichtung (5A, 5B1, 5B2, 5C) einen Speicher und wenigstens einen Prozessor aufweist, und
wobei der wenigstens eine Prozessor konfiguriert ist zum Ausführen eines Eingabeprozesses für das aufgenommene Bild (30, 31), das die mehreren Fadenkonen (2, 2A-2E) enthält, und eines Ableitungsprozesses, der die Bereichsinformationen für das Identifizieren der mehreren Bereiche (A-E), die jeweils eine Fadenkone in dem aufgenommenen Bild (30, 31) enthalten, ableitet.

10. Strickmaschine (1) nach einem der Ansprüche 3 bis 5, **dadurch gekennzeichnet, dass** die Bildverarbeitungsvorrichtung (4A, 4B) weiterhin eine Maschinelles-Lernen-Vorrichtung (6A, 6B2) aufweist, die konfiguriert ist zum Erfassen von entsprechenden Restfadenmengen der mehreren Fadenkonen (2, 2A-2E), die an dem Strickmaschinen-Hauptkörper oder an der Peripherie des Strickmaschinen-Hauptkörpers angeordnet sind, wobei die Maschinelles-Lernen-Vorrichtung (6A, 6B2) aufweist:
einen Speicher (61) für Lerndatensätze zum Speichern einer Vielzahl von Lerndatensätzen, die jeweils Eingabedaten, die das eine Fadenkone (2) enthaltende Konenbild (33) umfassen, und Ausgabedaten, die den Eingabedaten entsprechen und die Restfadenmenge der Fadenkone (2, 2A-2E) in dem Konenbild (33) umfassen, aufweisen,
eine Maschinelles-Lernen-Einheit (62), die konfiguriert ist zum maschinellen Lernen eines Modells für das Ableiten der Korrelation zwischen den Eingabedaten und den Ausgabedaten gemäß der Eingabe der mehreren Lerndatensätze, und
einen Speicher (63) für ein gelerntes Modell, der das gelernte Modell (5B2) nach dem maschinellen Lernen durch die Maschinelles-Lernen-Einheit (62) speichert.

11. Strickmaschine (1) nach einem der Ansprüche 3 bis 5, **dadurch gekennzeichnet, dass** die Bildverarbeitungsvorrichtung (4A, 4B) weiterhin eine Ableitungsvorrichtung (5A) aufweist, die konfiguriert ist zum Erfassen der entsprechenden Restfadenmengen mehrerer Fadenkonen (2, 2A-2E), die an dem Strickmaschinen-Hauptkörper oder an der Peripherie des Strickmaschinen-Hauptkörpers angeordnet sind, und einen Speicher und wenigstens einen Prozessor aufweist,
wobei der wenigstens eine Prozessor konfiguriert ist zum Ausführen eines Eingabeprozesses für das Konenbild (33), das eine Fadenkone (2) enthält, und eines Ableitungsprozesses, der die Restfadenmenge der Fadenkone in dem aufgenommenen Bild ableitet.

12. Strickmaschine (1) nach einem der Ansprüche 3 bis 5, **dadurch gekennzeichnet, dass** die Bildverarbeitungsvorrichtung (4C) weiterhin eine Maschinelles-Lernen-Vorrichtung (6C) aufweist, die konfiguriert ist zum Erfassen der entsprechenden Verbindungsbeziehungen zwischen den mehreren Fadenkonen (2, 2A-2E), die an dem Strickmaschinen-Hauptkörper oder an der Peripherie des Strickmaschinen-Hauptkörpers angeordnet sind, und mehreren Spannvorrichtungen (16), wobei die Maschinelles-Lernen-Vorrichtung (6C) aufweist:
einen Speicher (61) für Lerndatensätze zum Speichern einer Vielzahl von Lerndatensätzen, die jeweils Eingabedaten, die das die mehreren Fadenkonen (2, 2A-2E) enthaltende aufgenommene Bild (30, 31) umfassen, und Ausgabedaten, die den Eingabedaten entsprechen und entsprechende Verbindungsbeziehungen zwischen den mehreren Fadenkonen (2, 2A-2E) und den mehreren Spannvorrichtungen (16) in dem aufgenommenen Bild (30, 31) umfassen, aufweisen,
eine Maschinelles-Lernen-Einheit (62), die konfiguriert ist zum maschinellen Lernen eines Modells für das Ableiten der Korrelation zwischen den Eingabedaten und den Ausgabedaten gemäß der Eingabe der mehreren Lerndatensätze, und
einen Speicher (63) für ein gelerntes Modell, der das gelernte Modell (5C) nach dem maschinellen Lernen durch die Maschinelles-Lernen-Einheit (62) speichert.

13. Strickmaschine (1) nach einem der Ansprüche 3 bis 5, **dadurch gekennzeichnet, dass** die Bildverarbeitungsvorrichtung (4C) weiterhin eine Ableitungsvorrichtung (5C) aufweist, die konfiguriert ist zum Erfassen von entsprechenden Verbindungsbeziehungen zwischen mehreren Fadenkonen (2, 2A-2E), die an dem Strickmaschinen-Hauptkörper oder an der Peripherie des Strickmaschinen-Hauptkörpers angeordnet sind, und mehreren Spannvorrichtungen (16), wobei die Ableitungsvorrichtung (5C) einen Speicher und wenigstens einen Prozessor aufweist, und
wobei der Prozessor konfiguriert ist zum Ausführen eines Eingabeprozesses für das aufgenommene Bild (30, 31), das mehrere Konen (2A-2E) enthält, und eines Ableitungsprozesses für das Ableiten der entsprechenden Verbindungsbeziehungen zwischen den mehreren Fadenkonen (2, 2A-2E) und den mehreren Spannvorrichtungen (16) in dem aufgenommenen Bild (30, 31).

## Revendications

1. Dispositif de traitement d'image configuré pour détecter des statuts respectifs de plusieurs cônes de fil (2, 2A-2E), disposés sur un corps principal d'une machine à tricoter ou à une périphérie du corps principal de la machine à tricoter, **caractérisé par** :
une unité d'acquisition (40) pour acquérir une image capturée (30, 31) comportant plusieurs cônes de fil (2, 2A-2E), disposés sur le corps principal de la machine à tricoter ou à la périphérie du corps principal de la machine à tricoter ; et
une unité de détection d'état de cône de fil (41) pour détecter des états respectifs des plusieurs cônes de fil (2, 2A-2E) inclus dans l'image capturée (30, 31) en appliquant un traitement d'image à l'image capturée (30, 31) acquise par l'unité d'acquisition (40),
dans lequel ladite unité de détection d'état de cône de fil (41) est configurée pour détecter des quantités résiduelles respectives de fils des plusieurs cônes de fil (2, 2A-2E) dans l'image capturée (30, 31) en appliquant ledit traitement d'image à l'image capturée (30, 31), et
dans lequel ladite unité de détection d'état de cône de fil (41) est configurée pour :
identifier plusieurs régions (A-E) entourant respectivement un cône de fil, en entrant ladite image capturée (30, 31) acquise par l'unité d'acquisition (40) dans un premier modèle appris (5B1) qui a appris automatiquement la corrélation entre une image de cône (33) comportant un cône de fil (2) et les régions (A-E) entourant respectivement un cône de fil des plusieurs cônes de fil (2, 2A-2E) dans l'image capturée (30, 31), et
détecter les quantités résiduelles respectives de fils desdits plusieurs cônes de fil (2, 2A-2E), un par un, dans l'image capturée (30, 31), en entrant l'image de cône (33) comportant ledit cône de fil (2) dans un deuxième modèle appris (5A, 5B2) qui a appris automatiquement la corrélation entre l'image de cône (33) comportant un cône de fil (2) et la quantité résiduelle de fil du cône de fil dans l'image de cône (33).

2. Dispositif de traitement d'image selon la revendication 1, **caractérisé en ce que** ladite unité de détection d'état de cône de fil (41) est configurée pour détecter des relations de connexion respectives entre lesdits plusieurs cônes de fil (2, 2A-2E) et une pluralité de dispositifs de tension (16) par ledit traitement d'image.

3. Machine à tricoter (1) comprenant le dispositif de traitement d'image (4A-4C) selon la revendication 1 et le corps principal de la machine à tricoter.

4. Machine à tricoter (1) selon la revendication 3, caractérisée en ce ladite unité de détection d'état de cône de fil (41) est en outre configurée pour détecter les relations de connexion respectives entre lesdits plusieurs cônes de fil (2, 2A-2E) et une pluralité de dispositifs de tension (16) par ledit traitement d'image.

5. Machine à tricoter (1) selon la revendication 4, **caractérisée en ce que** ladite unité de détection d'état de cône de fil (41) est configurée pour détecter les relations de connexion respectives entre lesdits plusieurs cônes de fil (2, 2A-2E) dans l'image capturée (30, 31) et ladite pluralité de dispositifs de tension (16), en entrant ladite image capturée (30, 31) acquise par ladite unité d'acquisition (40) dans un modèle appris (5C) qui a appris automatiquement la corrélation entre l'image capturée (30, 31) comportant lesdits plusieurs cônes de fil (2, 2A-2E) et les relations de connexion entre lesdits plusieurs cônes de fil (2, 2A-2E) et la pluralité de dispositifs de tension (16).

6. Machine à tricoter (1) selon l'une des revendications 3 à 5, **caractérisée en ce que** ledit dispositif de traitement d'image (4A-4C) comprend en outre un dispositif d'apprentissage automatique (6A, 6B2) configuré pour détecter les quantités résiduelles respectives de fils des plusieurs cônes de fil (2, 2A-2E), disposés sur le corps principal de la machine à tricoter ou à la périphérie du corps principal de la machine à tricoter, et **en ce que**
ledit dispositif d'apprentissage automatique (6A, 6B2) comprend :
une mémoire pour un ensemble de données d'apprentissage (61) destiné à stocker une pluralité d'ensembles de données d'apprentissage dont chacun comprend des données d'entrée comprenant l'image capturée (30, 31) comportant les plusieurs cônes de fil (2, 2A-2E) et des données de sortie mises en correspondance avec les données d'entrée et comprenant des données des quantités résiduelles respectives de fils des plusieurs cônes de fil (2, 2A-2E) dans l'image capturée (30, 31) ;
une unité d'apprentissage automatique (62) configurée pour effectuer un apprentissage automatique d'un modèle destiné à l'inférence de la corrélation entre les données d'entrée et les données de sortie ; et
une mémoire pour le modèle appris (63) qui stocke le modèle appris (5A) qui a été appris par l'unité d'apprentissage automatique (62).

7. Machine à tricoter (1) selon l'une des revendications 3 à 5, **caractérisée en ce que** ledit dispositif de traitement d'image (4A, 4B) comprend en outre un dispositif d'inférence (5B2) configuré pour détecter les quantités résiduelles respectives de fils de plusieurs cônes de fil (2, 2A-2E), disposés sur le corps principal de la machine à tricoter ou à la périphérie du corps principal de la machine à tricoter, comprenant une mémoire et au moins un processeur, et **en ce que**
ledit au moins un processeur est configuré pour exécuter un processus d'entrée pour l'image capturée (30, 31) comportant les plusieurs cônes de fil (2, 2A-2E) et un processus d'inférence qui infère les quantités résiduelles respectives de fils des plusieurs cônes de fil (2, 2A-2E) dans l'image capturée (30, 31).

8. Machine à tricoter (1) selon l'une des revendications 3 à 5, **caractérisée en ce que** ledit dispositif de traitement d'image (4A, 4B) comprend en outre un dispositif d'apprentissage automatique (6A, 6B2) configuré pour détecter les quantités résiduelles respectives de fils de plusieurs cônes de fil (2, 2A-2E), disposés sur le corps principal de la machine à tricoter ou à la périphérie du corps principal de la machine à tricoter, et **en ce que**
ledit dispositif d'apprentissage automatique (6A, 6B2) comprend :
une mémoire pour des ensemble de données d'apprentissage (61) destiné à stocker une pluralité d'ensembles de données d'apprentissage dont chacun comprend des données d'entrée comprenant l'image capturée (30, 31) comportant plusieurs cônes de fil (2, 2A-2E) et des données de sortie correspondant auxdites données d'entrée et comprenant des informations régionales identifiant les plusieurs régions (A-E) entourant un cône de fil dans l'image capturée (30, 31) ;
une unité d'apprentissage automatique (62) configurée pour effectuer un apprentissage automatique d'un modèle destiné à l'inférence de la corrélation entre lesdites données d'entrée et lesdites données de sortie en fonction de l'entrée desdits plusieurs ensembles d'ensembles de données d'apprentissage ; et
une mémoire pour le modèle appris (63) qui stocke le modèle appris (5A) après l'apprentissage automatique par ladite unité d'apprentissage automatique (62).

9. Machine à tricoter (1) selon l'une des revendications 3 à 5, **caractérisée en ce que** ledit dispositif de traitement d'image (4A, 4B) comprend en outre un dispositif d'inférence (5A, 5B1, 5B2, 5C) configuré pour détecter les états respectifs de plusieurs cônes de fil (2, 2A-2E), disposés sur le corps principal de la machine à tricoter ou à la périphérie du corps principal de la machine à tricoter,
ledit dispositif d'inférence (5A, 5B1, 5B2, 5C) comprenant une mémoire et au moins un processeur, et **en ce que**
ledit au moins un processeur est configuré pour exécuter un processus d'entrée pour l'image capturée (30, 31) comportant les plusieurs cônes de fil (2, 2A-2E) et un processus d'inférence qui infère les informations régionales identifiant les plusieurs régions (A-E) entourant un cône de fil respectivement dans l'image capturée (30, 31).

10. Machine à tricoter (1) selon l'une des revendications 3 à 5, **caractérisée en ce que** ledit dispositif de traitement d'image (4A, 4B) comprend en outre un dispositif d'apprentissage automatique (6A, 6B2) configuré pour détecter les quantités résiduelles respectives de fils des fils de plusieurs cônes de fil (2, 2A-2E), disposés sur le corps principal de la machine à tricoter ou à la périphérie du corps principal de la machine à tricoter, et **en ce que**
ledit dispositif d'apprentissage automatique (6A, 6B2) comprend :
une mémoire pour des ensemble de données d'apprentissage (61) stockant une pluralité d'ensembles de données d'apprentissage dont chacun comprend des données d'entrée comprenant l'image de cône (33) comportant un cône de fil (2) et des données de sortie mises en correspondance avec lesdites données d'entrée et comprenant la quantité résiduelle de fil du cône de fil (2, 2A-2E) dans l'image de cône (33) ;
une unité d'apprentissage automatique (62) configurée pour effectuer un apprentissage automatique d'un modèle destiné à l'inférence de la corrélation entre lesdites données d'entrée et lesdites données de sortie en fonction de l'entrée desdits plusieurs ensembles d'ensemble de données d'apprentissage ; et
une mémoire pour le modèle appris (63) qui stocke le modèle appris (5B2) après l'apprentissage automatique par ladite unité d'apprentissage automatique (62).

11. Machine à tricoter (1) selon l'une des revendications 3 à 5, **caractérisée en ce que** ledit dispositif de traitement d'image (4A, 4B) comprend en outre un dispositif d'inférence (5A) configuré pour détecter les quantités résiduelles respectives de fils de plusieurs cônes de fil (2, 2A-2E), disposés sur le corps principal de la machine à tricoter ou à la périphérie du corps principal de la machine à tricoter, comprenant une mémoire et au moins un processeur, et **en ce que**
ledit au moins un processeur est configuré pour exécuter un processus d'entrée pour l'image de cône (33) comportant un cône de fil (2) et
un processus d'inférence qui infère la quantité résiduelle de fil du cône de fil dans l'image capturée.

12. Machine à tricoter (1) selon l'une des revendications 3 à 5, **caractérisée en ce que** ledit dispositif de traitement d'image (4C) comprend en outre un dispositif d'apprentissage automatique (6C) configuré pour détecter les relations de connexion respectives entre les plusieurs cônes de fil (2, 2A-2E), disposés sur le corps principal de la machine à tricoter ou à la périphérie du corps principal de la machine à tricoter, et une pluralité de dispositifs de tension (16), et **en ce que**
ledit dispositif d'apprentissage automatique (6C) comprend :
une mémoire pour des ensemble de données d'apprentissage (61) stockant une pluralité d'ensembles de données d'apprentissage dont chacun comprend des données d'entrée comprenant l'image capturée (30, 31) comportant les plusieurs cônes de fil (2, 2A-2E) et des données de sortie mises en correspondance avec lesdites données d'entrée et comprenant des relations de connexion respectives entre lesdits plusieurs cônes de fil (2, 2A-2E) et les plusieurs dispositifs de tension (16) dans l'image capturée (30, 31),
une unité d'apprentissage automatique (62) configurée pour effectuer un apprentissage automatique d'un modèle destiné à l'inférence de la corrélation entre lesdites données d'entrée et lesdites données de sortie en fonction de l'entrée desdits plusieurs ensembles d'ensemble de données d'apprentissage, et
une mémoire pour le modèle appris (63) qui stocke le modèle appris (5C) après l'apprentissage automatique par ladite unité d'apprentissage automatique (62).

13. Machine à tricoter (1) selon l'une des revendications 3 à 5, **caractérisée en ce que** ledit dispositif de traitement d'image (4C) comprend en outre un dispositif d'inférence (5C) configuré pour détecter des relations de connexion respectives entre plusieurs cônes de fil (2, 2A-2E), disposés sur le corps principal de la machine à tricoter ou à la périphérie du corps principal de la machine à tricoter, et plusieurs dispositifs de tension (16), dans lequel ledit dispositif d'inférence (5C) comprend une mémoire et au moins un processeur, et **en ce que**
ledit processeur est configuré pour exécuter un processus d'entrée pour l'image capturée (30, 31) comportant plusieurs cônes de fil (2A-2E) et un processus d'inférence qui infère les relations de connexion respectives entre lesdits plusieurs cônes de fil (2, 2A-2E) et les plusieurs dispositifs de tension (16) dans l'image capturée (30, 31).
